# EUROPEAN PATENT APPLICATION

(11) **EP 4 531 466 A2**
(43) Date of publication of application: **02.04.2025**
(21) Application number: 24202859.5
(22) Date of filing: 26.09.2024
(51) Int. Cl.: H04W 48/20, H04W 84/12

(54) **SCANNING AND ACCESS POINT SELECTION ENHANCEMENTS FOR WIRELESS NETWORKING SYSTEMS**

(30) Priority: 28.09.2023 US 202363586256 P; 24.09.2024 US 202418894822
(71) Applicant: Apple Inc., Cupertino, CA 95014 (US)
(72) Inventor: KNECKT, Jarkko L., Cupertino, 95014 (US); BOODANNAVAR, Veerendra, Cupertino, 95014 (US); WANG, Qi, Cupertino, 95014 (US); SHANI, Oren, Cupertino, 95014 (US); DOMINGUEZ, Charles F., Cupertino, 95014 (US); DASH, Debashis, Cupertino, 95014 (US); LIU, Yong, Cupertino, 95014 (US); VERMA, Lochan, Cupertino, 95014 (US); WU, Tianyu, Cupertino, 95014 (US); KRISHNAN, Neelakantan Nurani, Cupertino, 95014 (US); HEDAYAT, Ahmad Reza, Cupertino, 95014 (US)
(74) Representative: Zacco Denmark A/S

(57) **Abstract**

Methods, systems and apparatuses for non-access point (non-AP) and access point (AP) multi-link devices (MLDs) are described. A non-AP MLD can transmit, to an AP MLD, a query for information comprising at least one of one or more sets of parameters or identities associated with one or more target AP MLDs. The non-AP MLD can receive, from the AP MLD, a message comprising the information and select, based at least in part on the information, a target AP MLD of the one or more target AP MLDs. The non-AP MLD can transmit a roaming request to the target AP MLD and further receive a roaming response from the target AP MLD.

## Description

### FIELD

The present application relates to wireless communications, including techniques for wireless communication among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modern WLANs are based on the IEEE 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (AP(s)), which are also referred to as wireless routers, act as base stations for the wireless network. AP(s) transmit and receive radio frequency signals for communication with wireless client devices. AP(s) can also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall can be stationary devices as well).

Mobile electronic devices can take the form of smart phones or tablets that a user typically carries. Wearable devices (also referred to as accessory devices) are a newer form of mobile electronic device, one example being smart watches. Additionally, low-cost low-complexity wireless devices intended for stationary or nomadic deployment are also proliferating as part of the developing "Internet of Things". In other words, there is an increasingly wide range of desired device complexities, capabilities, traffic patterns, and other characteristics.

Some WLANs can utilize multi-link operation (MI,O), e.g., using a plurality of channels (e.g., links) concurrently. AP(s) and/or STAs capable of MLO can be referred to as multi-link devices (MLD). For example, AP(s) capable of MLO can be referred to as AP-MLDs and STAs capable of MI,O that are not acting as AP(s) can be referred to as non-AP MLDs. Improvements in the field are desired.

### SUMMARY

Embodiments described herein relate to systems, methods, apparatuses, and mechanisms for enhanced scanning and access point selection by access point (AP) and non-access point (non-AP) MLDs in wireless networking systems.

In some embodiments, a non-AP MLD can transmit, to an AP MLD, a query for information comprising at least one of one or more sets of parameters or identities associated with one or more target AP MLDs. The non-AP MLD can receive, from the AP MLD, a message comprising the information and select, based at least in part on the information, a target AP MLD of the one or more target AP MLDs. The non-AP MLD can transmit a roaming request to the target AP MLD and further receive a roaming response from the target AP MLD.

According to some embodiments, the method can further include scanning the one or more target AP MLDs for performance information and determining, based on least on the performance information, to transmit the roaming request. Additionally or alternatively, the method can further include transmitting, to the AP MLD, a response message indicating approval to receive notifications corresponding to the one or more target AP MLDs. Furthermore, the method can include receiving, from the AP MLD, one or more notifications corresponding to the one or more target AP MLDs. According to some embodiments, the one or more notifications can be associated with triggering criteria. Additionally or alternatively, the query can comprise a basic service set (BSS) transition management (BTM) query message, according to some embodiments.

In some embodiments, the query can comprise queries associated with a received signal strength indicator (RSSI) estimation of the one or more target AP MLDs, whether one of the one or more target AP MLDs is acceptable for traffic of the non-AP MLD, which operation parameters the non-AP MLD should utilize, which of the one or more target AP MLDs is a preferred target AP MLD for roaming, delay and throughput information of traffic of the non-AP MLD, or which of the one or more target AP MLDs is preferred based on security settings of the non-AP MLD. Additionally or alternatively, the query can indicate to the AP MLD to provide performance estimation information based on at least one of link setup parameters corresponding to a link of the non-AP MLD, explicitly provided link parameters, or parameters used by the AP MLD for one or more other links.

In some embodiments, the message can comprise information corresponding to the one or more target AP MLDs and indicates at least one of whether a quality of service (QoS) of stream classification service (SCS) streams for the one or more target AP MLDs is acceptable, when a throughput for the one or more target AP MLDs is higher than a first threshold, when a delay for the one or more target AP MLDs is lower than a second threshold, or when a security mode is supported by the one or more target AP MLDs. Additionally or alternatively, the one or more target AP MLDs can be one or more neighboring APs MLDs, one or more explicitly requested AP MLDs, all AP MLDs within a 1-hop or 2-hop neighborhood, or all AP MLDs in a mobility domain.

According to further embodiments, a processor can be configured to cause an AP MLD to receive, from a non-AP MLD, a query for information associated with one or more parameters of one or more target AP MLDs. The processor can be further configured to cause the AP MLD to transmit, to the non-AP MLD, the information comprising additional information associated with link performance of the one or more target AP MLDs. The processor can be further configured to cause the AP MLD to receive, from the non-AP MLD, an indication to instruct a target AP MLD of the one or more target APs to transition to a maintenance mode.

According to some embodiments, the information can include at least one of throughput information, delay information, or information indicating whether QoS SCS streams are maintained. Additionally or alternatively, the query can indicate to the AP MLD to provide the non-AP MLD with performance measurement information based on the one or more parameters. Accordingly, the processor can be further configured to cause the AP MLD to perform, based at least in part on the one or more parameters, throughput and latency measurements associated with the one or more target AP MLDs.

In some embodiments, the processor can be further configured to cause the AP MLD to determine, based on a BSS parameter change count value (BPCC) value changing from a previous BPCC value, to refrain from transmitting the information to the non-AP MLD. According to some embodiments, the maintenance mode can be one of a default mode, a link-maintained mode in which BSS parameter updates of the one or more target APs are transmitted to the non-AP MLD from the AP MLD, or a hot stand-by mode in which buffered frames are forwarded to the target AP MLD by the AP MLD. Additionally or alternatively, the processor can be further configured to cause the AP MLD to receive, from the non-AP MLD, a response message, wherein the response message indicates approval to transmit notifications corresponding to at least one target AP of the one or more target AP MLD. Furthermore, the processor can be further configured to cause the AP MLD to determine whether one or more conditions are satisfied and transmit, based at least in part on the determination, one or more notifications associated with the at least one target AP to the non-AP MLD.

In some embodiments, a non-access point (non-AP) multi-link device (MLD) can include a radio and a processor operably coupled to the radio and configured to cause the non-AP MLD to establish one or more links with an AP MLD. Additionally, respective links of the one or more links can operate according to respective link-specific operating parameters. Furthermore, the processor can be configured to cause the non-AP MLD to transmit, to an AP MLD, a query requesting information associated with one or more target AP MLDs. Additionally or alternatively, the processor can be configured to cause the non-AP MLD to receive, from the AP MLD, the information comprising additional information associated with link performance of the one or more target AP MLDs according to the link-specific operating parameters. Furthermore, the processor can be configured to cause the non-AP MLD to transmit, to the AP MLD, an indication to instruct a target AP of the one or more target APs to transition to a hot stand-by mode.

In some embodiments, the processor can be configured to cause the non-AP MLD to adjust the respective link-specific operating parameters. Additionally or alternatively, the link-specific operating parameters can include at least one of power management (PM) operating parameters, target wake time (TWT) operating parameters, transaction identifier (TID)-to-link mapping parameters, subchannel selective transmission (SST) operating parameters, or enhanced multi-link single radio (EMI,SR) operating parameters. In some embodiments, the query can include a common stream classification service (SCS) traffic setting and the information can include one or more identities of target AP MLDs of the one or more target AP MLDs that satisfy the common SCS traffic setting.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7-8 illustrates examples of MLDs, according to some embodiments.
Figure 9 illustrates an example of AP selection associated with a roaming procedure, according to some embodiments.
Figure 10 illustrates an example of an ultra-high reliability (UHR) STA communicating with an associated AP and querying a target AP, according to some embodiments.
Figure 11 is a communication flow diagram illustrating an example method of enhanced AP selection, according to some embodiments.
Figures 12A-B illustrate example aspects of scanning efficiency improvements associated with the enhanced AP selection, according to some embodiments.
Figure 13 illustrates an example communication flow between a STA and an associated AP corresponding to a procedure for estimating throughput and delays as well as providing link maintenance rules, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that can appear throughout the present application are provided below:
**UE:** User Equipment
**AP:** Access Point
**STA:** Wireless Station
**TX:** Transmission/Transmit
**RX:** Reception/Receive
**DL:** Downlink
**UL:** Uplink
**MLD:** Multi-link Device
**LAN:** Local Area Network
**WLAN:** Wireless LAN
**RAT:** Radio Access Technology
**UHR:** Ultra-High Reliability
**SCS:** Stream Classification Service
**CA:** Carrier Aggregation
**CSMA:** Carrier Sense Multiple Access
**OFDMA:** Orthogonal Frequency-Division Multiple Access
**C-OFDMA:** Concurrent Orthogonal Frequency-Division Multiple Access
**C-TDMA:** Concurrent Time Division Multiple Access
**C-SR:** Coordinated Spatial Reuse
**TXOP:** Transmission Opportunity
**BSS:** Basic Service Set
**OBSS:** Overlapping Basic Service Set
**PHY:** Physical Layer
**MLO:** Multi-Link Operation
**BW:** Bandwidth
**RNR:** Reduced Neighbor Report
**BTM:** Basic Service Set Transition Management
**BA:** Block Acknowledgement
**QoS:** Quality of Service
**PM:** Power Management
**TWT:** Target Wake Time
**SST:** Sub-channel Selective Transmission
**EMLSR:** Enhanced Multi-Link Single Radio
**TID:** Traffic Identifier
**AC:** Access Category
**TID:** Traffic identifier
**TPUT:** Throughput
**TB:** Transport Block
**MCS:** Modulation and Coding Scheme
**EML:** Enhanced Multi-Link
**OMI:** Operating Mode Indication
**RU:** Resource Unit
**SMPS:** Spatial Multiplexing Power Save
**DL MU PPDU:** Downlink Multi-User Physical Protocol Data Unit
**UL EDCA AC:** Uplink Enhanced Distributed Channel Access Access Category
**NSS:** Number of Spatial Streams
**EDCA:** Enhanced Distributed Channel Access
**STR:** Simultaneous Transmission and Reception

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium can include other types of non-transitory memory as well or combinations thereof. In addition, the memory medium can be located in a first computer system in which the programs are executed, or can be located in a second different computer system which connects to the first computer system over a network, such as the Internet. In the latter instance, the second computer system can provide program instructions to the first computer for execution. The term "memory medium" can include two or more memory mediums which can reside in different locations, e.g., in different computer systems that are connected over a network. The memory medium can store program instructions (e.g., embodied as computer programs) that can be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.
**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.
**Wireless Device (and/or Wireless Station)** - any of various types of computer systems devices which performs wireless communications using WLAN communications. As used herein, the term "wireless device" can refer to a mobile device, as defined above, or to a stationary device, such as a stationary wireless client or a wireless base station. For example, a wireless device can be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.
**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.
**Processing Element** - refers to various implementations of digital circuitry that perform a function in a computer system. Additionally, processing element can refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure can be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form can be automatically filled out by the computer system where the computer system (e.g., software executing on the computer system) analyzes the fields of the form and fills in the form without any user input specifying the answers to the fields. As indicated above, the user can invoke the automatic filling of the form, but is not involved in the actual filling of the form (e.g., the user is not manually specifying answers to fields but rather they are being automatically completed). The present specification provides various examples of operations being automatically performed in response to actions the user has taken.
**Concurrent** - refers to parallel execution or performance, where tasks, processes, signaling, messaging, or programs are performed in an at least partially overlapping manner. For example, concurrency can be implemented using "strong" or strict parallelism, where tasks are performed (at least partially) in parallel on respective computational elements, or using "weak parallelism", where the tasks are performed in an interleaved manner, e.g., by time multiplexing of execution threads.
**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

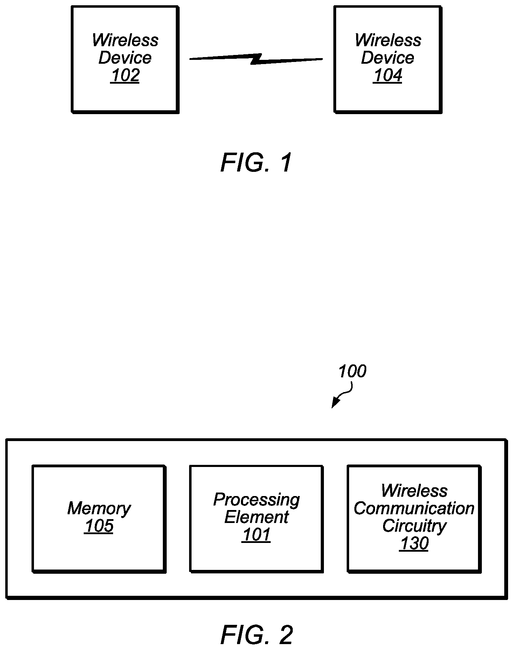

### Figures 1-2 - Wireless Communication System

Figure 1 illustrates an exemplary (and simplified) wireless communication system in which aspects of this disclosure can be implemented. It is noted that the system of Figure 1 is merely one example of a possible system, and embodiments of this disclosure can be implemented in any of various systems, as desired.

As shown, the exemplary wireless communication system includes a ("first") wireless device 102 in communication with another ("second") wireless device. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform ranging using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), LTE, LTE-Advanced (LTE-A), NR, ultra-wideband (UWB), etc.

The wireless devices 102 and 104 can be any of a variety of types of wireless device. As one possibility, one or more of the wireless devices 102 and/or 104 can be a substantially portable wireless user equipment (UE) device, such as a smart phone, hand-held device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of devices.

Each of the wireless devices 102 and 104 can include wireless communication circuitry configured to facilitate the performance of wireless communication, which can include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device might be configured to communicate using either of Bluetooth or Wi-Fi using partially or entirely shared wireless communication circuitry (e.g., using a shared radio or at least shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it is configured to communicate. As a further possibility, a device can include one or more radios or radio components which are shared between multiple wireless communication protocols, and one or more radios or radio components which are used exclusively by a single wireless communication protocol. For example, a device might include a shared radio for communicating using one or more of LTE and/or 5G NR, and separate radios for communicating using each of Wi-Fi and Bluetooth. Other configurations are also possible.

As previously noted, aspects of this disclosure can be implemented in conjunction with the wireless communication system of Figure 1. For example, a wireless device (e.g., either of wireless devices 102 or 104) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable AP(s), as well as privacy improvements for associated non-AP MLD.

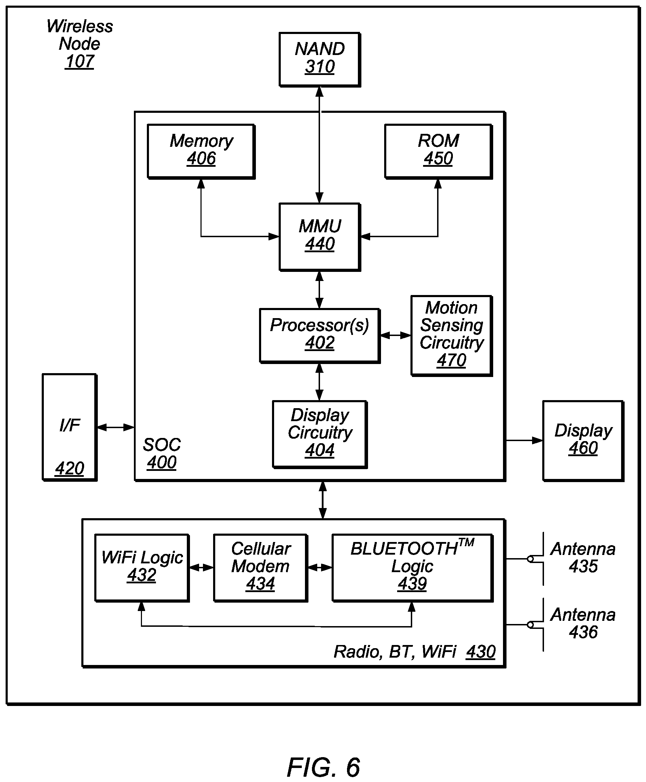

Figure 6 illustrates an exemplary wireless device 100 (e.g., corresponding to wireless devices 102 and/or 104) that can be configured for use in conjunction with various aspects of the present disclosure. The device 100 can be any of a variety of types of devices and can be configured to perform any of a variety of types of functionality. The device 100 can be a substantially portable device or can be a substantially stationary device, potentially including any of a variety of types of devices. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions are also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols.

Note that in some cases, the wireless communication circuitry 130 can include its own processing element (e.g., a baseband processor), e.g., in addition to the processing element 101. For example, the processing element 101 can be an `application processor' whose primary function can be to support application layer operations in the device 100, while the wireless communication circuitry 130 can be a `baseband processor' whose primary function can be to support baseband layer operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture are also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interfaces, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

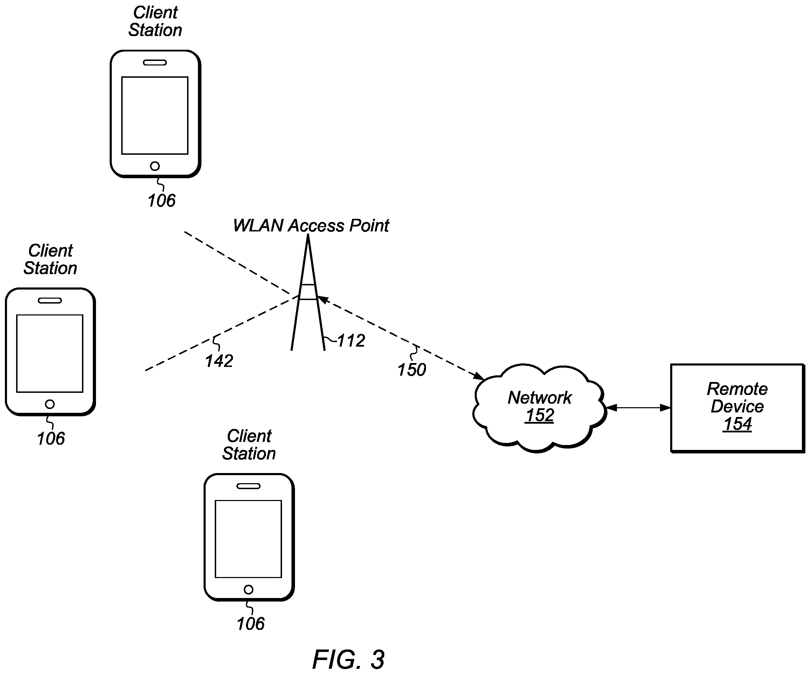

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which can be an exemplary implementation of device 100) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable AP(s), as well as privacy improvements for associated non-AP MLD.

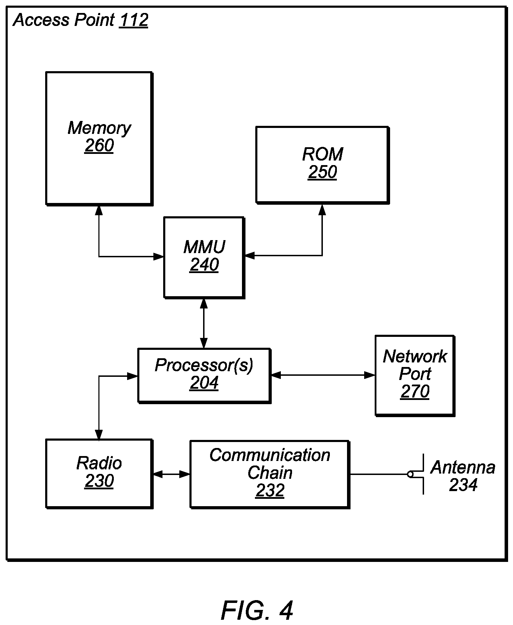

### Figure 4 - Access Point Block Diagram

Figure 4 illustrates an exemplary block diagram of an access point (AP) 112, which can be one possible exemplary implementation of the device 100 illustrated in Figure 4. It is noted that the block diagram of the AP of Figure 4 is only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), 5G NR, UWB, etc., for example when the AP is co-located with a base station in case of a small cell, or in other instances when it can be desirable for the AP 112 to communicate via various different wireless communication technologies.

Further, in some embodiments, as further described below, AP 112 can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable AP(s), as well as privacy improvements for associated non-AP MLD.

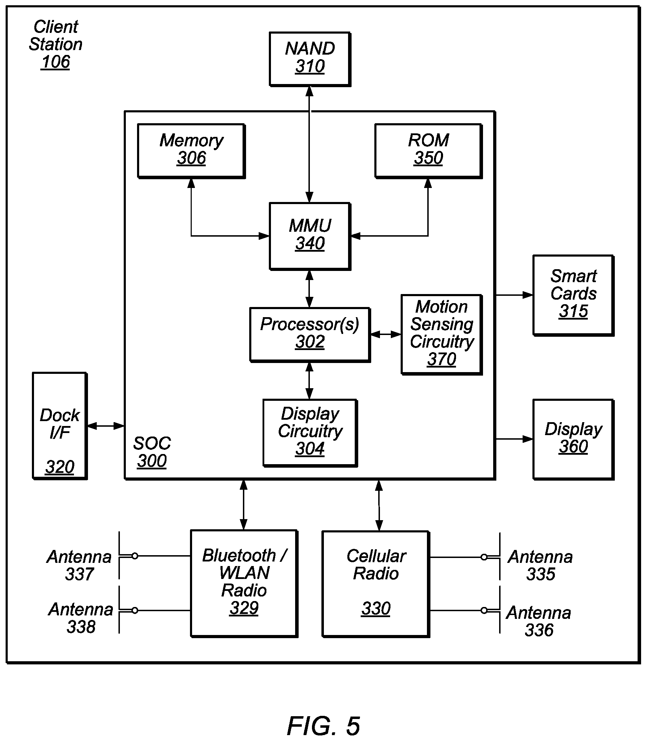

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320,329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that are configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that are configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

### Figure 6 - Wireless Node Block Diagram

Figure 6 illustrates one possible block diagram of a wireless node 107, which can be one possible exemplary implementation of the device 100 illustrated in Figure 6. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, Bluetooth, Wi-Fi, NFC, GPS, UWB, etc.).

The wireless node 107 can include at least one antenna, and in some embodiments, multiple antennas 435 and 436, for performing wireless communication with base stations and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 can be capable of performing cellular communication according to one or more cellular communication technologies. Some or all components of the wireless communication circuitry 430 can be used for ranging communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., Wi-Fi Logic 432) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

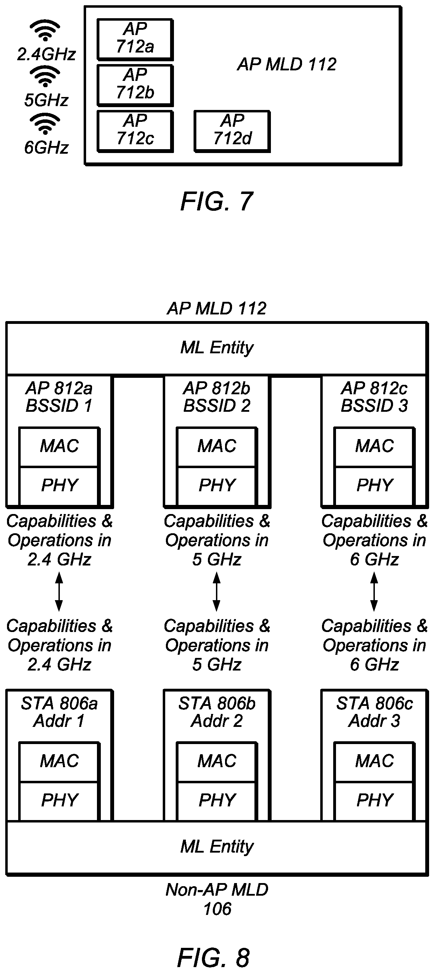

### Figures 7-8 - Multi-Link Device (MLD) operation

One or more IEEE 802.11 standards, such as IEEE 802.11 be, can include Multi-link Device (MLD) capabilities. In current implementations, an access point (AP) Multi Link Device (MLD) node can manage its affiliated AP(s). Thus, an AP MLD node can modify, add, and/or subtract affiliated AP(s) to increase capacity, manage Basic Service Sets (BSSs) interference and coverage, including switching AP(s) to operate in channels with less interference, and/or steer associated non-AP MLD nodes to operate on better performing AP(s) and/or AP MLD nodes.

Figure 7 illustrates an AP MLD 112, according to some embodiments. The AP MLD can operate any number of affiliated AP(s), e.g., AP(s) 712a, 712b, 712c, and 712d in the illustrated example. The affiliated AP(s) can operate on any of various frequency bands. Affiliated AP(s) can operate on different frequency ranges (e.g., channels) of the same band, or on different frequency bands.

The AP MLD can provide the affiliated AP(s) from a single physical device, e.g., a single shared housing and potentially using the same antenna(s). In some embodiments, the AP MLD can provide the AP(s) from multiple distinct devices (e.g., a first device can provide one or more AP(s), a second device can provide a different one or more AP(s), etc.). In some embodiments, various affiliated AP(s) can be separated spatially (e.g., using beams in different directions, using different antennas with a shared housing (e.g., antennas of a same physical device), and/or of different devices, etc.).

In some embodiments, spatially separated affiliated AP(s) can operate on a same (or at least partially overlapping) channel(s).

Figure 8 illustrates an AP MLD 112 in communication with a non-AP MLD 106, according to some embodiments.

As shown, the AP MLD 112 can operate three affiliated AP(s). In the illustrated example, AP 812a can operate in a 2.4 GHz band, AP 812b can operate in a 5 GHz band, and AP 812c can operate in a 6 GHz band. It will be appreciated that any number of affiliated AP(s) can be used in any combination of bands. For example, the AP MLD can operate multiple affiliated AP(s) in one band and/or can possibly not operate any affiliated AP(s) in a band. The affiliated AP(s) can include various layers, e.g., media access control (MAC) and/or physical (PHY) layers, among various possibilities. The affiliated AP(s) can use different basic service sets (BSS) and/or different BSS identifiers (BSSID), e.g., BSSIDs 1-3.

As shown, the non-AP MLD 106 can operate three affiliated STAs, e.g., corresponding to the three affiliated AP(s). In the illustrated example, STA 806a can operate in the 2.4 GHz band, STA 806b can operate in a 5 GHz band, and STA 806c can operate in a 6 GHz band. The STAs can communicate with the corresponding AP(s). It will be appreciated that any number of affiliated STAs can be used in any combination of bands. For example, the non-AP MLD can operate multiple affiliated STAs in one band and/or can possibly not operate any affiliated STAs in a band. The non-AP MLD can operate STAs corresponding to some, none, or all of the AP(s) of the AP MLD. The affiliated STAs can include various layers, e.g., PHY and/or MAC layers, among various possibilities. The affiliated STAs can use different addresses, e.g., Addr 1-3.

The non-AP MLD can provide the affiliated STAs from a single physical device, e.g., a single shared housing and potentially using the same antenna(s). In some embodiments, the non-AP MLD can provide the STAs from multiple distinct devices (e.g., a first device can provide one or more STAs, a second device can provide a different one or more STAs, etc.). In some embodiments, various affiliated STAs can be separated spatially (e.g., using beams in different directions, using different antennas with a shared housing (e.g., antennas of a same physical device), and/or of different devices, etc.).

The various affiliated STAs and AP(s) can communicate concurrently / simultaneously. For example, STA 806a can exchange uplink and/or downlink data with AP 812a on a first link while STA 806b exchanges uplink and/or downlink data with AP 812b on a second link, etc. It will be appreciated that such concurrent communication can include (e.g., different) data being exchanged at the same time, at least partially overlapping times, and/or different times on different links. For example, data between the AP MLD and non-AP MLD can be routed over the first available link and/or a link selected based on other criteria (e.g., lowest energy use, etc.). For example, a first packet or portion of data can be sent over a first link and concurrently a second packet or portion of data can be sent over a second link.

In some embodiments, the AP MLD and non-AP MLD can include respective ML entities. An ML entity can provide upper MAC functionality that controls the separate AP(s) and/or STAs, and can control traffic delivery through available links, e.g. between the various AP(s) and STAs. The respective MLDs (e.g., AP and non-AP) can have only one respective MAC SAP interface. The ML entity can manage this interface. The ML entity can manage transmission buffering (e.g., bookkeeping and link selection in the transmitter) and data re-order buffering in reception (e.g., combination of the data that is transmitted in different links).

The AP MLD 112 and non-AP MLD 106 can exchange information about their respective operations, operating parameters, and/or capabilities.

The non-AP MLD can have various capabilities for operating a STA in a particular band. The capabilities can be different for different bands. For example, the capabilities in a band can describe the maximum (e.g., fastest, most flexible, most powerful, highest throughput, etc.) parameter values that a STA of the non-AP MLD can use. Operations or operating parameters can describe the parameter values that are currently in use or planned to be in use at a future time.

For example, the parameters can include an applicable PHY version and its parameters. The parameters can describe supported services and transmission formats that are available. The parameters can also describe available resources, bandwidth(s) and number of spatial streams. The parameters can describe power save support parameters which can enable low power transmissions. For instance, an AP can support Target Wake Time (TWT) power save.

In some embodiments, the links can be located so closely (e.g., spatially and/or in frequency), that non-AP STA can possibly not operate them independently (e.g., due to limits of the device and/or to manage resources or performance). AP(s) can support STAs (e.g., non-AP MLDs) that are not capable of simultaneously transmitting and receiving on the link pair.

In some embodiments, the non-AP MLD can operate STAs communicating with multiple AP-MLDs. For example, a first STA can communicate with a first AP MLD and a second STA can communicate with a second AP MLD. Similarly, an AP MLD can communicate with multiple STAs. For example, one affiliated AP can communicate with multiple STAs.

In the illustrated example, the non-AP MLD operates a number of STAs equal to the number of AP(s) provided by the AP MLD. However, different numbers are possible. For example, the AP MLD can provide more AP(s) than the number of STAs operated by the non-AP MLD or vice versa. The number of AP(s) and/or number of STAs can change over time.

According to some embodiments, it can be beneficial for client privacy enhanced (CPE) stations (STAs) or clients to change or adjust certain parameters used for performing communications with an AP. For example, eavesdroppers can seek to intercept, extract or listen in on communications between certain CPE STAs and AP(s). Accordingly, clients can seek to perform more secure communications between the CPE STAs and AP(s) using various techniques involving address changing or related parameter adjustments.

For example, it can be beneficial for a CPE Client to change its own over-the-air (OTA) media access control (MAC) address used for communicating with an AP when reassociating from one CPE AP to another CPE AP. Additionally or alternatively, it can be beneficial for a CPE Client to initiate changing its own OTA MAC address used with a CPE AP in an associated state (e.g., STA State 4) without any loss of connection. In some embodiments, it can be beneficial for a CPE Client to initiate changing the OTA MAC addresses of all associated CPE Client's in the base station system (BSS) (e.g., those CPE Clients in associated STA State 4) simultaneously without any loss of connection. Furthermore, it can be beneficial for a CPE client and CPE AP to change the transmitted sequence number (SN), packet number (PN) and transaction identifier (TID) to an uncorrelated new value on downlink and uplink to new values in an associated STA State 4, without any loss of connection, according to some embodiments. Moreover, it can be further beneficial for a CPE Client and CPE AP to change the CPE Client's association identifier (AID) to an uncorrelated new value in an associated STA State 4, without any loss of connection.

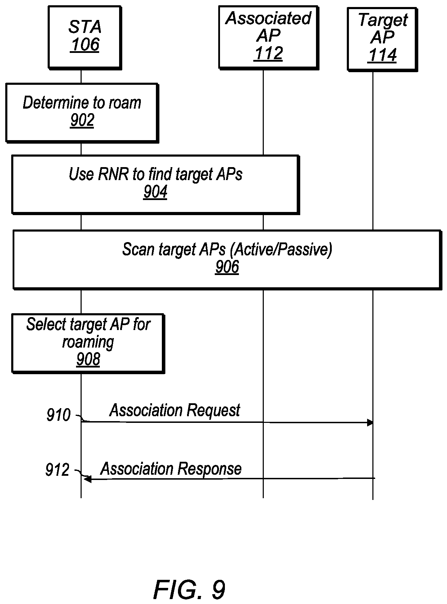

### Figure 9 - AP Selection

Figure 9 illustrates an example of AP selection associated with a roaming procedure, according to some embodiments. For example, a STA 106 can initiate a roaming procedure to associate with a new or target AP 114 when the link performance becomes degraded. In some instances, the STA 106 can have information related to the physical (PHY) link performance, a BSS load, and/or capabilities associated with the old associated AP 112. Additionally, the associated AP 112 and target AP(s) 114 can have information including STA parameters used with the associated AP as well as a new AP load, according to some embodiments.

At 902, the STA 106 can determine to scan APs in order to make a determination of whether to roam or associate with a new or different target AP 114, according to some embodiments. In other words, the STA 106 can collect information of candidate APs to determine whether it roams. For example, the STA 106 can experience degraded link performance and subsequently decide to perform a scanning procedure to find a more suitable AP to roam to. The STA 106 can scan continuously in the background (while associated with an AP such as AP 112) to determine whether the associated AP 112 has suitable performance or whether other neighboring AP(s) have better performance (in which case the STA can roam to these better performing AP(s)). Continuous scanning can reduce roaming delays by preparing for roaming in advance.

Accordingly, at 904, the STA 106 can use a reduced neighbor report (RNR) to find one or more candidate or target AP(s) 114 (e.g., target AP 114), according to some embodiments. In other words, the STA can query the associated AP 112 for candidate APs. In some instances, a RNR can allow the STA 106 to request information from an associated AP (e.g., associated AP 112) regarding neighboring or nearby AP(s). This information can include the candidate neighboring or nearby AP(s)' current load, signal strength, and available channels (among other information). Accordingly, by requesting and receiving this information from the associated AP, the STA 106 can make a better-informed decision in order to roam and/or re-associate to a preferred or ideal AP.

According to some embodiments, neighboring APs can be characterized as APs which are located in nearby positions and can further belong to a cluster of APs. Furthermore, neighboring APs can include 1-hop neighbor APs and 2-hop neighbor APs. For example, 1-hop neighbors can be considered as APs that are directly reachable via the STA or AP while 2-hop neighbor APs can be considered as APs that are indirectly reachable via the STA or AP. For example, a 2-hop neighbor can correspond to a neighboring AP which is separated by two network devices. In other words, data which is passed from a source (e.g., a STA) must make two hops to reach its destination at a second network device. For example, the data can hop or be transmitted from the STA to the first AP and then hop or be transmitted/forwarded from the first AP to the second AP.

Additionally, at 906, the STA 106 can scan target AP(s) such as target AP 114 using active or passive scanning, according to some embodiments. For example, the STA 106 can transmit a probe request to one or more target AP(s) 114 as a way to scan available AP(s), according to some embodiments. In some embodiments, the target AP(s) 114 can transmit a probe response to the STA 106. Using this additional information, the STA 106 can then, at 908, select an AP (e.g., target AP 114) for roaming, transmit an association request to target AP 114 at 910, according to some embodiments. Additionally, the STA 106 can receive an association response from the target AP 114 at 912 as part of the association and/or roaming procedure.

However, it can be beneficial for the STA to attain additional information other than the responses associated with scanning procedures (e.g., beacon and probe responses) before initiating a roaming procedure. Furthermore, in some scenarios, target AP performance can be difficult to estimate since achievable uplink (UL) and downlink (DL) delays and throughputs can possibly not be clear for STA traffic and therefore suitable parameters can possibly not be able to be setup before roaming. Accordingly, it can be beneficial to describe systems, methods, apparatuses, and mechanisms for enhanced scanning and access point selection by AP and non-AP MI,Ds in wireless networking systems.

### Scanning and Access Point Selection Enhancements in Wireless Networking Systems

In some instances, STA delays and throughputs for roaming target AP(s) can be difficult to estimate. For example, in Wi-Fi 6, triggered UL access throughput and transmission delays can depend on the scheduling and resource unit (RU) allocation logic. For instance, the associated AP can possibly not share transmission resources evenly, according to some embodiments. The AP can share more transmission resources with STAs according to application data stream requirements. In some embodiments, the STA can signal that it has buffered UL traffic in its transmission buffer in order to get more resources.

To improve triggered access, wireless local area networks (WLANs) can utilize a Stream Classification Service (SCS) that can allow a STA to signal to its associated AP the QoS characteristics of its UL and DL streams, according to some embodiments. Accordingly, the AP can schedule the streams to meet their QoS characteristics. In some embodiments, the SCS can utilize setup signaling in which the STA specifies the streams and their QoS characteristics and the associated AP can accept or reject the SCS stream setup. In some instances, if a stream is setup, the AP can schedule the UL and/or DL SCS streams according to their QoS characteristics. Additionally, for the UL SCS streams, the STA can specify triggering intervals, maximum transmission delay, average and peak traffic throughputs, as well as maximum tolerable frame loss (e.g., a packet erasure ratio) among other parameters. Moreover, the DL SCS streams can have similar information as UL SCS streams excluding the triggering intervals which can possibly not be specified.

Wi-Fi 6 APs typically trigger UL transmissions from multiple users and transmit DL transmissions to multiple users (MU) at the same time. Accordingly, the throughput of a STA can depend on the allocated RU size and transmission rate that is possible to use on the RU, according to some embodiments.

Furthermore, in Wi-Fi 7, multi-link operation performance can depend on the number of operated links, link specific performance, and multi-link access mechanisms (e.g., depending on whether Simultaneous Transmit and Receive (STR) or Enhanced Multi-link Single Radio (EMLSR) are used between multi-link devices (MLDs)). In typical scenarios, multi-link transmissions maintain sufficient delay performance since STAs can obtain transmission opportunities (TXOPs) in multiple links. Accordingly, if a single link is busy, the STA can obtain a TXOP in other links.

However, in Wi-Fi 8, low latency enhancements can allow AP(s) to favor low latency traffic and coordinated transmission schemes can enhance WLAN performance. For example, low latency traffic performance can possibly not depend on AP congestion and the STA and AP can cooperate to get accurate delay and throughput estimations. This can be beneficial before roaming procedures are initiated since the UHR STA should have precise throughput and delay estimations for its traffic on the target AP MLD, according to some embodiments.

According to some embodiments, a STA can transmit SCS streams without any violations to their QoS characteristics even when it is scanning or roaming. In other words, while the STA is scanning and roaming, the STA should keep its radio(s) available for data transmissions and receptions with minimal to no additional transmission delays and frame loss to the SCS streams.

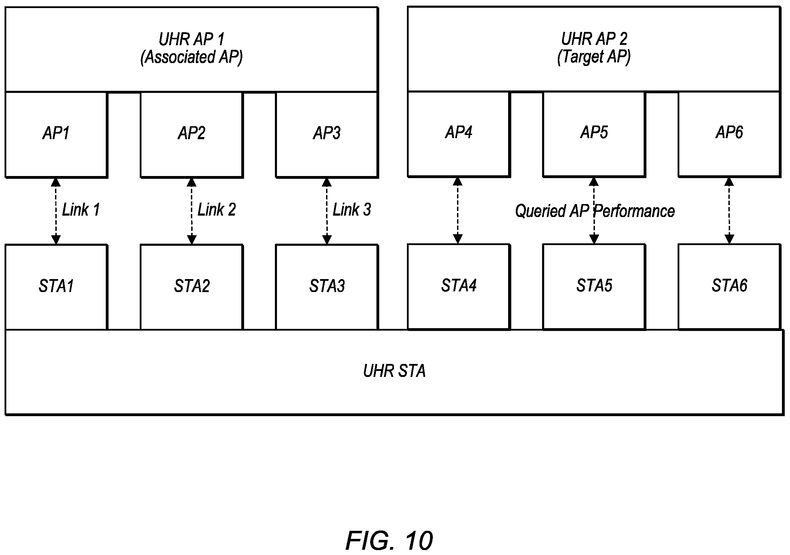

### Figure 10 - Associated UHR STA Profiles

Figure 10 illustrates an example of an ultra-high reliability (UHR) STA communicating with an associated AP and querying a target AP, according to some embodiments. Figure 10 illustrates a first UHR AP Multi-link device (MLD) (e.g., UHR AP 1) including affiliated AP1, AP2, and AP3 which are respectively associated with the STA1, STA2, and STA3 of UHR STA via Link 1, Link 2, and Link 3.

Additionally, the STA can setup links with other UHR AP(s). In link setup, the UHR STA and UHR AP can signal their capabilities and operating parameters for each link that is created. For instance, the UHR STA can request to create links 4, 5, and 6 with UHR AP2. The link setup can have "add link" request and "add link" response signaling. For example, in the add link request frame, the STA can provide the capabilities and operating parameters for each created link (e.g., links associated with STAs 4, 5, and 6). Accordingly, if the UHR AP2 accepts the link(s) setup, the UHR AP2 can provide the capabilities and operation parameters for APs 4-6 that operate in links 4-6 respectively in an add link response frame. In some embodiments, some operating parameters or settings can be common for all links. For instance, Block Acknowledgement (BA)settings and/or SCS streams can be common for all links. However, some settings such as Target Wake Time (TWT) Streams and multi-link operations (MLO) settings (e.g., STR or EMLSR) can need to be set separately with each UHR AP. In some instances, a UHR STA can be limited to transmit traffic only with a single UHR AP at a time. However, during a short time period of roaming, the new and old UHR APs can transmit traffic.

According to some embodiments, the UHR STA can decide to scan to determine whether it should start roaming. The STA can query a target AP regarding its performance. In these queries, the setup links can help to estimate the achievable throughput and latency in the links with the queried UHR AP. For example, the UHR STA can query operating parameters and performance estimation of UHR AP 2 links 4-6 according to link parameters of the AP4, AP5, and AP6 via STA4, STA5, and STA6 respectively, including the MLO and power save settings, if applicable.

Accordingly, it can be beneficial to accurately estimate target UHR AP throughput and delay performance in order to select whether to roam, according to some embodiments. Additionally or alternatively, it can be further beneficial to consider UHR STA capabilities and ongoing traffic throughput and delay estimations. In some embodiments, it can be further beneficial to get an estimation from a target AP of whether it meets the QoS characteristics of the UL and DL SCS streams.

Furthermore, a UHR STA can combine the UHR STA knowledge and UHR AP performance estimations to get accurate throughput and delay estimations, according to some embodiments. For example, UHR AP 1 can be aware of its own capabilities and/or parameter settings such as UHR coordination features including Concurrent Orthogonal Frequency-Division Multiple Access (C-OFDMA), Concurrent Time Division Multiple Access (C-TDMA), Coordinated Spatial Reuse (C-SR), transmission opportunity (TXOP) Pre-emption, and AP scheduling (as some non-limiting examples). Furthermore, UHR AP1 can be aware or have knowledge of a traffic profile including downlink (DL) frames arrivals as well as uplink (UL) and DL frames sizes. Additionally, the UHR AP 1 can have knowledge of basic service set (BSS) congestion and/or overlapping basic service sets (OBSSs) associated with the STA and/or transmission priorities, according to some embodiments.

In some embodiments, the UHR AP (e.g., UHR AP 1) can additionally have knowledge or data regarding SCS streams including delay, UL frames transmission times and throughput requirements of STA applications. Additionally or alternatively, the STA can be aware or have information of end user activity related to urgency of transmissions (as one example). According to some embodiments, this information or data can be shared from the STA to the AP via low latency applications.

Furthermore, the STA can have knowledge of physical (PHY) link performance or DL Received Signal Strength Indicator (RSSI) measured from the AP transmissions, according to some embodiments. In some instances, the queried AP can possibly not have received any transmission from the STA and therefore can possibly not have an estimation of the STA RSSI. RSSI is a key parameter used to estimate link performance. For example, RSSI can be used to estimate achievable transmission rates and whether large bandwidth and high number of spatial stream transmissions are possible in the link. For example, data transmission rates can depend on the RSSI. The STA can signal to the APan RSSI estimation for the STA, according to some embodiments. This value can be used as a measured RSSI from the STA transmission. Additionally or alternatively, the STA can signal to the AP an estimated transmission rate(s) for UL and DL in the link(s). This estimation can also signal transmission bandwidth and number of spatial streams that the STA can use for UL and DL transmissions. According to some embodiments, the STA can signal to the AP signaling to indicate that the AP should use the RSSI value that STAs that roam from UHR AP1 to UHR AP2 typically have when they roam. Furthermore, AP2 can signal the learned RSSI value that it uses for link performance estimation, according to some embodiments. In some embodiments, the AP can signal a minimum RSSI that the STA should have in order to achieve the throughput and delay estimations.

Moreover, the STA can be aware its capabilities and/or current or preferred parameter settings. For example, the UHR STA can be aware of power saving and multi-link operation (MLO) capabilities as well as parameter settings related to bandwidth, number of spatial streams, triggered access, enhanced distributed carrier aggregation (EDCA) as well as UHR secondary channel transmissions.

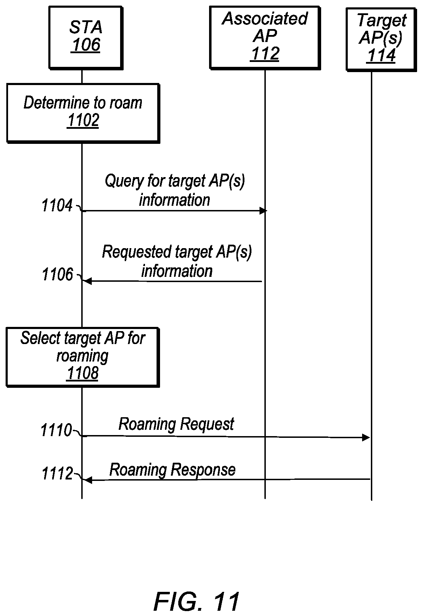

### Figure 11 - Enhanced AP Selection

Figure 11 is a communication flow diagram illustrating an example method of enhanced AP selection, according to some embodiments. Figure 11 illustrates an embodiment directed toward systems, methods, and mechanisms for non-AP MLDs to query AP-MLDs for information usable in selecting a preferred roaming target AP. For example, the STA 106 can determine to roam or associate with a new or target AP 114 when the link performance becomes degraded. In some instances, the STA 106 can already have information related to the physical (PHY) link performance, a BSS load, and/or capabilities associated with associated AP 112. Additionally, the associated AP 112 and target AP(s) 114 can have information including STA parameters used with the associated AP as well as a new AP load, according to some embodiments. However, the STA 106 can perform better informed and more efficient roaming procedures using additional information regarding candidate or target AP(s) 114 that is shared with the STA 106 by the associated AP 112.

Aspects of the method of Figure 11 can be implemented by a non-AP MLD in communication with an AP MLD. The AP MLD and/or non-AP MLD can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP MLD, and/or AP MLD, or other device to perform such method elements.

Note that while at least some elements of the method of Figure 11 are described in a manner relating to the use of communication techniques and/or features associated with IEEE and/or 802.11 (e.g., 802.1 1bn) specification documents, such description is not intended to be limiting to the disclosure, and aspects of the method of Figure 11 can be used in any suitable wireless communication system, as desired. Similarly, while elements of the method of Figure 11 are described in a manner relating to non-AP MLDs, such description is not intended to be limiting to the disclosure, and aspects of the method of Figure 11 can be used by STAs that are not MLDs, as desired. Similarly, while elements of the method of Figure 11 are described in a manner relating to UHR STAs and UHR AP(s), such description is not intended to be limiting to the disclosure, and aspects of the method of Figure 11 can be used by STAs and AP(s) that are not UHR STAs or UHR AP(s), as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

At 1102, the STA 106 can determine to scan to determine whether it should roam or associate with a new AP (e.g., re-associate), according to some embodiments. For example, the STA can make this determination or decision to roam based on the link experiencing degraded link quality (among other factors) or in response to a trigger message received from the associated AP 112. In other words, the STA 106 can collect information of candidate APs to determine whether it roams. For example, the STA can scan the one or more target AP MLDs for performance information and determine, based on least on the performance information, to transmit a roaming request.

At 1104, the STA 106 can transmit a query to the associated AP 112, according to some embodiments. For example, the STA 106 can transmit a query message to the associated AP 112 requesting information regarding capability and/or operating parameters of candidate or target AP(s) 114. According to some embodiments, this information can be utilized by the STA 106 in selecting of an AP to roam to.

According to some embodiments, the query message can be a Basic Service Set (BSS) Transition Management (BTM) query message which is transmitted from the STA 106 to the associated (e.g., first) AP 112. The BTM query message can be transmitted to the associated AP 112 in order to inquire whether one or more target AP(s) 114 (e.g., queried, or second AP(s)) are preferred for the STA's traffic, what operation parameters the STA 106 should use, which of the target AP(s) 114 is the best target AP for roaming, information related to delays and throughputs of traffic of the STA 106, and/or which of the target AP(s) 114 are preferred for security settings of the STA 106. While the query message can be a BTM query message according to some embodiments, the query message can possibly not be limited to this format or type of message.

At 1106, the associated AP 112 can respond to the query message with a message (e.g., a request message) including information related to the target (e.g., candidate) AP(s) 114 such that the STA 106 can select a preferred AP for roaming. In other words, the associated AP 112 can transmit a response to the query received from the STA 106, according to some embodiments. For example, the associated AP 112 can transmit a message to the STA 106 which can include information corresponding to the one or more target AP(s) 114. Further, the message can include information which indicates whether or not the SCS stream's QoS is sufficient for the UL and DL streams setup by the STA, if the throughput (TPUT) is higher than a TPUT threshold (e.g., TPUT > "X" Mbps), if the access delay is lower than a delay threshold (e.g., delay < "Y" ms), and/or whether or not a security mode (e.g., WPA3) is supported, according to some embodiments. Furthermore, the message can include information known by the AP including AP capabilities and/or parameter settings including coordination features including C-OFDMA, C-TDMA, C-SR, TXOP pre-emption, and AP scheduling (as some non-limiting examples). Furthermore, the message can include information corresponding to a traffic profile including DL frame arrivals as well as UL and DL frames sizes. Additionally or alternatively, the message can include information corresponding to BSS congestion and/or OBSSs associated with the STA and/or transmission priorities, according to some embodiments.

In some embodiments, the requested Target AP(s) 114 information of 1106 can include information of AP(s) that are not queried. For instance, a new AP can be added to an UHR AP or a new UHR AP can start to operate. In this scenario, the information of these APs can allow for the ST A to become aware of them. In another example, the response 1106 can include information for APs or UHR APs for which performance has changed (e.g., degraded or improved). Accordingly, the STA can become aware of updated and/or general performance of APs in its proximity. In some embodiments, the AP can send unsolicited Target AP(s) Information, if the previously transmitted AP information has changed.

In some embodiments, the message can be a BTM request message. However, the message can possibly not be limited to this format or type of message. For example, the message can also be a neighbor AP information request frame associated with a neighbor AP information request frame format, according to some embodiments.

At 1108, the STA 106 can select an AP for roaming, according to some embodiments. Based on the information received in the response to the query, the STA 106 can select a preferred AP of the candidate or target AP(s) 114 to associate with. For example, the STA can select a target AP 114 based on the aforementioned information included in the message from the associated AP 112 regarding the target AP's SCS stream QoS, TPUT, or support of a security mode among various other factors or information received from the AP and/or previously known by the STA 106, according to some embodiments. Accordingly, at 1110, the STA 106 can transmit a roaming request to the selected target AP 114 and at 1112, the STA 106 can receive a roaming response from the target AP 114, according to some embodiments.

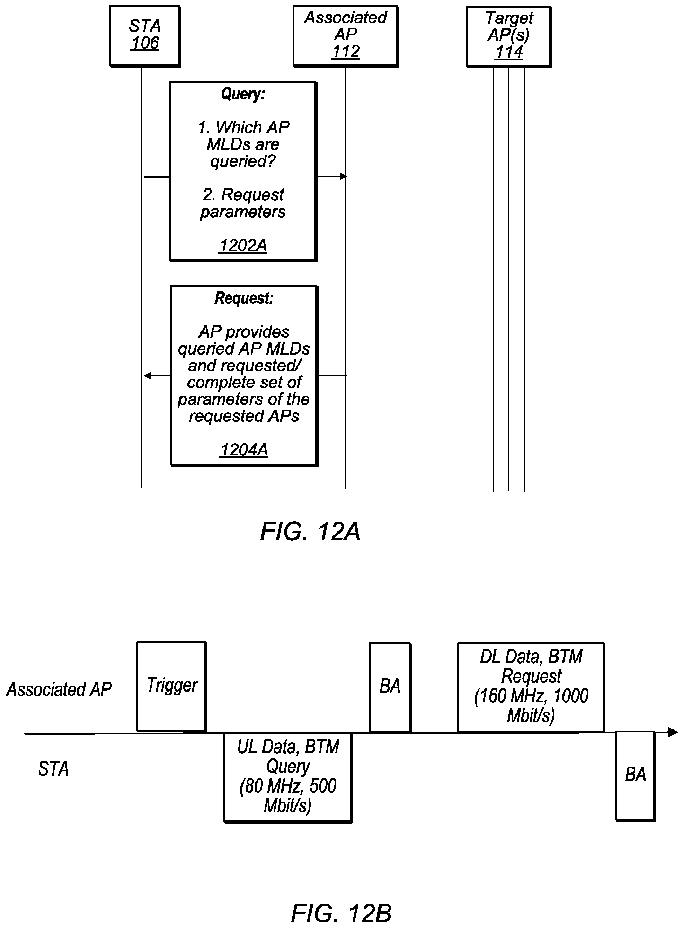

### Figures 12A-B - Scanning Efficiency Improvement

Figures 12A-B illustrate example aspects of scanning efficiency improvements associated with the enhanced AP selection described by Figure 11, according to some embodiments. For example, one benefit of UHR roaming procedure preparations is that they can be continuously ongoing. In other words, a UHR STA can be continuously checking its environment for up-to-date (e.g., current) conditions and performance associated with potential or target AP(s) that it can roam to if link conditions degrade. Therefore, UHR roaming scans can provide current traffic performance information for SCS streams and best effort data.

According to some embodiments, a STA (e.g., STA 106) can acquire additional information regarding potential target AP(s) for roaming. For example, in 1202A, the STA can transmit a query to an associated AP 112 requesting which UHR APs or AP MLDs the network considers to be the most suitable for the STA. In other words, the STA 106 can request the identities and their estimated throughput and delay performances of target AP(s) 114, according to some embodiments. Additionally or alternatively, the query message can include a query or request for a complete or full set of target AP parameters associated with the target AP(s) 114. In some embodiments, the STA 106 can request target AP parameters associated with a particular of explicitly request candidate or target AP. In some embodiments, the STA 106 can query link capabilities and operation parameters as well as other parameters that the network recommends for the STA to use in its links with the Target AP(s) 114. The associated AP 112 can additionally provide conditional throughput and delay estimations for specific STA settings. This can help STA to set its parameters in the link for the optimized throughputs and delay performance.

In other embodiments, the network can request the STA to create link(s) to an AP MLD to make the roaming to the AP MLD faster. For example, the links can be created and the STA can roam using only a single roam request frame. The setup links can help the target AP MLD to know the STA link specific parameters and the AP MLD can allocate transmission resources for the STA traffic and SCS streams, according to some embodiments. For instance, network can determine the STA transmission bandwidth and number of spatial streams and allocate RUs that are possible to be transmitted and received by the STA.

The requested parameters in the query (e.g., used for AP performance estimations by the STA) can include SCS streams which can define or be used to estimate the low latency traffic performance. For example, these SCS streams QoS characteristics parameters can be inherited or explicitly signaled to define or estimate the low latency traffic performance. Alternatively, the estimation can be based on the setup links in which SCS flows are maintained in the mobility domain, according to some embodiments.

Additionally, STA parameters which can define STA capabilities on operated links can be used for the performance estimation of links which can be setup for the target APs. The STA parameters can be signaled in the query message (e.g., BTM query) and the AP can apply the current advertised settings of the query, according to some embodiments. Alternatively, the STA parameters can be used to estimate the performance based on the link setup for the queried links (e.g., corresponding to target APs 114).

In some embodiments, Enhanced Multi-Link Operating Mode Indication (EMI, OMI) parameters which can define whether the STA uses enhanced multi-link single radio (EMI,SR) or simultaneous transmission and reception (STR) for the links with an AP MLD can also be signaled in the query message (e.g., BTM query) and the AP can apply the current advertised settings of the query, according to some embodiments. Alternatively, the EML OMI parameter can be used to estimate the performance based on the STA configuring a target AP MLD with specific MLO settings, according to some embodiments.

Additionally or alternatively, traffic identifier (TID)-to-link mapping parameters which can define if the STA and AP can negotiate which links are available in the AP MLD can also be used for performance estimations. For example, the TID-to-link mapping parameters can also be signaled in the query message (e.g., BTM query) and the AP can apply the current advertised settings of the query, according to some embodiments. Alternatively, the TID-to-link parameter can be used to estimate the performance based on the STA configuring a target AP MLD with specific MLO settings, according to some embodiments.

In some embodiments, an operating mode indication (OMI) parameter which can define if the STA can configure link specific BW, NSS, and UL TB support, a target wake time (TWT) Power Save parameter, which can define a link specific schedule when a STA is available, and a subchannel selective transmission (SST) or Secondary primary channels or anchor channels parameter which can define if a STA can be configured to operate on specific channels can be used in performance estimations. For example, these parameters can also be signaled in the query message (e.g., BTM query) and the AP can apply the current advertised settings of the query, according to some embodiments. Alternatively, these parameters can be used to estimate the performance based on the STA configuring a target AP MLD with specific MLO settings, according to some embodiments.

Furthermore, a PHY TX rate parameter which can define the modulation and coding scheme (MCS), number of spatial streams (NSS), or bandwidth (BW) available for the links can be used for performance estimations. For example, the PHY TX rate parameter can also be signaled in the query message (e.g., BTM query) and the AP can apply the current advertised settings of the query, according to some embodiments. Alternatively, the estimation based on the setup links can be further based on signaling from the STA or an estimation by the AP regarding the PHY TX rate, according to some embodiments.

In other words, the STA, EML OMI, TID-to-link mapping, OMI, TWT Power Save, SST / Secondary primary channels, and PHY TX rate parameters (among other parameters) can be explicitly signaled as parameter values in the query message, according to some embodiments.

In summary, at 1202A, the STA 106 can use a query frame or message to query an associated AP for parameters of neighboring AP(s) (e.g., 1-hop or 2-hop AP(s)), explicitly requested AP(s) (e.g., requested via explicit addresses or capabilities), all AP(s) in a mobility domain, and/or AP(s) based on security support (e.g., response to the query can only be from WPA3 supporting AP(s) or from AP(s) supporting STA privacy), according to some embodiments. Furthermore, the query frame or message can be encrypted so as to allow the STA to request complicated queries without privacy issues. Moreover, the query can allow the STA 106 to not need to switch to operate on different links to receive information from each AP separately.

Accordingly, in 1204A, the associated AP 112 can transmit a message (e.g., a request message) to the STA 106 which includes information associated with the queried AP parameters. For example, the associated AP 112 can provide the STA 106 with the identities of queried AP MLDs as well as the requested and/or complete set of parameters of the requested AP(s). Additionally or alternatively, the AP 112 can provide the STA 106 with the identities of all AP MLDs as well as their respective complete set of parameters. The information including the aforementioned parameters and/or identities of the target AP(s) 114 can be explicitly signaled as parameter values in the message, according to some embodiments. Furthermore, the associated AP 112 can apply the settings related to these parameters indicated by the query from the STA 106.

In other words, the associated AP 112 can provide a complete set of AP MLD information to the STA 106 in response to the query frame/message. In some embodiments, some UHR and AP MLD parameters can be available only in the request frame which is transmitted from the associated AP 112 to the STA 114. Additionally, the responding AP (e.g., associated AP 112) can possibly not need to limit the AP parameters with regard to a beacon and probe response (which can contain parameters associated with only the transmitting/associated AP 112). According to some embodiments, the associated AP 112 can provide information only if AP parameters have changed. In other words, the associated AP 112 can provide the information to the STA 106 if a parameter change is detected. For example, if a BSS Parameter Change Count (BPCC) value has changed, the associated AP 112 can provide a response to a query.

Figure 12B is a communication diagram illustrating additional aspects of the query and request communications between a STA and an associated AP described by Figure 12A, according to some embodiments. For example, the associated AP can transmit a basic variant trigger message that solicits a resource unit (RU) for the STA and the STA can transmit (in response to the trigger) UL data and include a BTM query management frame in the allocated RU that is transmitted to the associated AP via a link associated with a bandwidth of 80 MHz and a throughput of 500 Mbit/s (as one example). The associated AP can further respond with a block acknowledgement (BA) message in addition to a DL data in a BTM request message. In some embodiments, the BTM request message may, due to a larger amount of data as compared to the UL BTM query transmitted by the STA, be transmitted via a larger 160 MHz bandwidth and with a throughput of 1000 Mbit/s, according to some embodiments. Additionally, while the query and request can respectively be BTM query and BTM request messages according to some embodiments, these messages can possibly not be limited to this format or type of message.

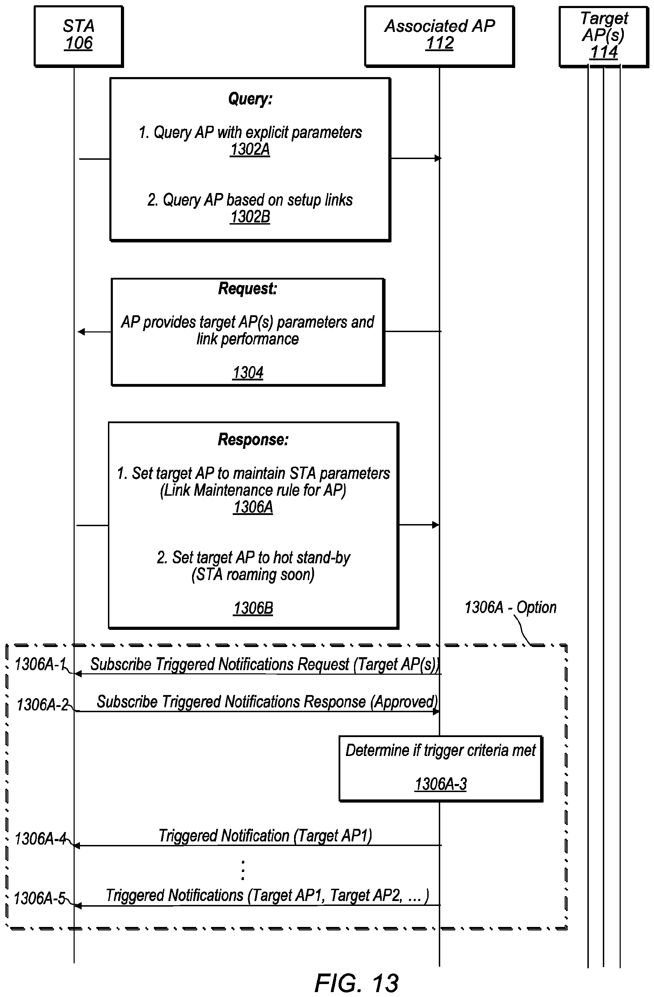

### Figure 13 -Throughput/Delay Estimations and Links Maintenance

Figure 13 illustrates an example communication flow between a STA and an associated AP corresponding to a procedure for estimating throughput and delays as well as providing link maintenance rules, according to some embodiments.

Aspects of the method of Figure 13 can be implemented by a non-AP MLD in communication with an AP MLD. The AP MLD and/or non-AP MLD can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP MLD, and/or AP MLD, or other device to perform such method elements.

Note that while at least some elements of the method of Figure 13 are described in a manner relating to the use of communication techniques and/or features associated with IEEE and/or 802.11 (e.g., 802.1 1bn) specification documents, such description is not intended to be limiting to the disclosure, and aspects of the method of Figure 13 can be used in any suitable wireless communication system, as desired. Similarly, while elements of the method of Figure 13 are described in a manner relating to non-AP MLDs, such description is not intended to be limiting to the disclosure, and aspects of the method of Figure 13 can be used by STAs that are not MLDs, as desired. Similarly, while elements of the method of Figure 13 are described in a manner relating to UHR STAs and UHR AP(s), such description is not intended to be limiting to the disclosure, and aspects of the method of Figure 13 can be used by STAs and AP(s) that are not UHR STAs or UHR AP(s), as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

At 1302A, the STA 106 can query the associated AP 112 with explicit parameters. In other words, the STA 106 can query the AP 112 for information regarding the target AP(s) 114 with respect to the explicitly indicated parameters. For instance, the STA 106 can explicitly request the AP 112 for information regarding the target AP(s) 114 and their low latency traffic performance via a SCS streams parameter (as one example parameter used in performance estimations). In some embodiments, the STA (e.g., STA 106) can explicitly signal in a query message all of its operation parameters to a queried AP (e.g., target AP(s) 114). This explicit parameter signaling can allow for the STA to query AP(s) that have no setup links, according to some embodiments.

According to some embodiments, the query message can include queries corresponding to a received signal strength indicator (RSSI) estimation of the one or more target AP MLDs, whether one of the one or more target AP MLDs is acceptable for the non-AP MLD's traffic, which operation parameters the non-AP MLD should utilize, which of the one or more target AP MLDs is a preferred target AP MLD for roaming, delay and throughput information of the non-AP MLD's traffic, or which of the one or more target AP MLDs is preferred based on security settings of the non-AP MLD. Additionally or alternatively, the query message can indicate to the AP MLD to provide performance estimation information based on at least one of link setup parameters corresponding to a link of the non-AP MLD, explicitly provided link parameters, or parameters used by the AP MLD for one or more other links.

Additionally or alternatively, at 1302B, the STA 106 can query the associated AP 112 based on setup links. In other words, the STA 106 can alternatively estimate the low latency traffic performance (associated with a SCS streams parameter) based on the setup links since the SCS flows are maintained in the mobility domain. For example, the STA can create or add links and set MLO or link specific operating parameters such that SCS flows at the mobility domain level can be set by the STA for low latency traffic (as one example). Accordingly, the AP can estimate performance according to the setup links and the set operating parameters. In some embodiments, the STA can adjust link settings such as power management (PM), target wake time (TWT), subchannel selective transmission (SST), and Enhanced Multi-Link Single Radio (EMLSR) among various other settings to improve throughput and delay estimations. Furthermore, the link performance on the current settings can be known by the AP for roaming.

In some embodiments, the information of the query message can include at least one of throughput information, delay information, or information indicating whether quality of service (QoS) stream classification service (SCS) streams are maintained. Additionally or alternatively, the query can indicate to the AP MLD to provide performance measurement information based on the one or more parameters. Accordingly, the AP MLD can perform, based at least in part on the one or more parameters, throughput and latency measurements. In some embodiments, the AP MLD can determine, based on a basic service set parameter change count value (BPCC) value changing from a previous BPCC value, to refrain from transmitting the information to the non-AP MLD. In some embodiments, the query message and message (e.g., a request message) can be respectively received and transmitted in accordance with the bandwidth (BW), number of spatial streams (NSS), and modulation and coding scheme (MCS) associated with the non-AP MLD.

According to some embodiments, a target AP's performance can be estimated according to STA 106 parameters and settings in its link(s) with the associated AP 112. In other words, the network can assume that the STA 106 will have similar capabilities and operating parameters in use on the queried (e.g., target) APs. For example, the network can assume that the STA 106 uses band-specific (e.g., (2.4, 5 or 6 GHz) operating parameter settings and therefore can apply the same STR and EMI,SR settings (e.g., as with the associated AP) between the target APs. Additionally or alternatively, the target AP performance estimation can be conditional to STA capabilities and operation parameter settings and an AP can signal these parameters to the STA in its response.

In some embodiments, the STA 106 can use setup link parameters to estimate traffic or SCS flow delays and throughputs, according to some embodiments. For example, the STA 106 transmit a message to the associated AP 112 to add one or more links with the target AP(s) 114 including the STA's preferred parameters, according to some embodiments. Additionally or alternatively, the associated AP 112 can transmit a response regarding the added links and further include new AP parameters, according to some embodiments. Accordingly, the STA 106 can create links with optimized and/or updated operating settings, according to some embodiments. According to some embodiments, the associated AP 112 and target AP(s) 114 can have information including STA parameters used with the associated AP 112 as well as a new AP load, according to some embodiments. Additionally or alternatively, the associated AP 112 and target AP(s) 114 can have information including the STA SCS streams and further use the STA operating settings with the created links. In other words, the STA 106 can add and setup links with candidate APs (e.g., target AP(s) 114) and using preferred STA and AP parameters and/or operating settings (e.g., specifying how data transmissions will be performed) before roaming and associating with said target AP(s) 114.

In other words, while the STA 106 can have information related to the PHY link performance, BSS load(s), and/or AP capabilities of the associated AP 112 target AP(s) 114, the STA 106 can estimated throughput and delays associated with the target AP(s) 114. Accordingly, the STA can select an AP (e.g., one of the target AP(s) 114) for roaming based on its previously known and subsequently collected information from the associated AP. Furthermore, the STA can then transmit a message to the selected AP as a link performance check. Additionally, the selected AP can transmit a response as part of the link performance check, according to some embodiments. Accordingly and based on the aforementioned known and received information and link performance check, the STA can transmit a roaming request to a target AP and subsequently receive a roaming response from said target AP, according to some embodiments.

Furthermore, at 1304, the associated AP 112 can provide the target AP(s) 114 parameters and link performance to the STA 106 based on the queries of 1302A or 1302B, according to some embodiments. For example, the associated AP 112 can transmit a message (e.g., a request message) to the STA 106 to provide the appropriate information regarding the target AP(s) 114 and the explicitly queried parameters of the query. For example, the associated AP 112 can provide the STA 106 with information corresponding to the target AP(s) 114 and their low latency traffic performance associated with a SCS streams parameter (as one example).

In some embodiments, the message can include information corresponding to the one or more target AP MLDs and indicates at least one of whether a quality of service (QoS) of stream classification service (SCS) streams for the one or more target AP MLDs is acceptable, if a throughput for the one or more target AP MLDs is higher than a first threshold, if a delay for the one or more target AP MLDs is lower than a second threshold, or if a security mode is supported by the one or more target AP MLDs. Additionally or alternatively, the one or more target AP MLDs can be one or more neighboring APs, one or more explicitly requested APs, all APs within a 1-hop or 2-hop neighborhood, or all APs in a mobility domain.

According to some embodiments, a UHR STA can be associated with a UHR AP for an extended duration. Furthermore, during the association the UHR STA can maintain a list of APs or groups of APs that it considers as primary roaming candidates. The UHR STA can scan these primary roaming candidate APs more frequently to be aware of their throughput and delay performance so as to determine whether they are suitable for STAs SCS streams. While the frequent scanning requests can result in additional signaling overhead, it can be beneficial for the STA to maintain updated information regarding whether these APs are available, whether their capabilities and operating parameters are the same as the currently associated AP, and whether these APs are able to transmit the SCS streams traffic according to QoS characteristics.

Having received the message from the associated AP 112 at 1304, the STA 106 may, at 1306A, transmit a response message to the associated AP 112 indicating for the AP 112 to set the target AP(s) 114 to maintain STA parameters, according to some embodiments. In other words, the STA 106 can respond to the associated AP 112 to indicate that the target AP(s) 114 should not change their STA parameters since the STA 106 can roam to one of them. Accordingly, while the STA 106 can possibly not be associated with the target AP(s) 114, the target AP(s) 114 would be prepared and have the STA 106's preferred STA parameters should the STA 106 decide to roam to the one of the target AP(s) 114. In other words, the message from the AP (e.g., associated AP 112) can provide STA details for a queried AP. In other words, the STA 106 can transmit a response message to the associated AP 112 indicating for the associated AP 112 to maintain links as in the association between the STA 106 and the associated AP 112.

In some embodiments, the STA 106 may, as part of or in addition to the response of 1306A, subscribe to notifications from the target AP(s) 114. For example, the STA 106 can transmit, to an AP MLD, a response message indicating approval to receive notifications corresponding to the one or more target AP MLDs. Accordingly the STA can then receive, from the AP MLD, one or more notifications corresponding to the one or more target AP MLDs. According to some embodiments, the one or more notifications can be associated with triggering criteria. The notifications can be subscribed from a remote AP MLD to which STA can (or can possibly not) have links setup. The associated AP MLD 112 can possibly notify the STA 106 of changes in the subscribed remote AP MLDs. The subscribed notifications can reduce signaling overhead and allow the STA 106 to quickly receive notifications through the associated AP 112 if information of the subscribed AP (e.g., a target AP 114) has changed. This fast information sharing can enable the STA 106 to always have up-to-date information of the subscribed APs.

For example, remote AP notifications can be transmitted to the STA 106 by the associated AP 112. Remote AP notifications can include a "Notify AP not accepting roaming notification" which can be transmitted to the STA 106 if the remote AP is congested and has no capacity to accept new roaming AP(s). Additionally, the remote AP (e.g., a target AP 114) can have separate accepting associations for new STAs sending requests OTA, according to some embodiments. According to other embodiments, a remote AP notification can include a "TID-2-link mapping settings change" which can be transmitted (if requested by link management mode 2) if the remote AP organizes its links to different traffic types (e.g., due to particular links only allowing particular traffic). Accordingly, the STA can need to consider which links to use depending on the traffic types. Furthermore, a remote AP notification can include a "AP not capable to transmit STA SCS streams" which can be transmitted (if requested by link management mode 2) if the remote AP is not able to provide the desired QoS for the STA streams, according to some embodiments.

According to some embodiments, the associated AP 112 can transmit remote notifications for target AP(s) 114 to the STA 106 in an unsolicited manner. For example, the associated AP 112 may, without receiving a request from the STA 106, send unsolicited reporting of notifications to the STA 106. According to some embodiments, the associated AP 112 can determine to send these notifications based on conditions or criteria being satisfied or occurrence of particular events.

Alternatively, the associated AP 112 can request that the STA 106 receive notifications for target AP(s) 114. For example, as part of or in addition to 1306A, the associated AP 112 can transmit, at 1306A-1, a subscribe triggered notifications request to the STA 106. This request can indicate or request for the STA 106 to receive notifications for remote APs including one or more target APs 114. Accordingly, at 1306A-2, the STA 106 can transmit a subscribe triggered notifications response to the associated AP 112 with approval for receiving said remote notifications. In other words, the subscribe triggered notifications response at 1306A-2 can allow for the STA 106 to subscribe to the target AP(s) 114. Furthermore, the remote notifications can be associated with triggering criteria. Accordingly, the associated AP 112 may, at 1306A-3, determine if trigger criteria are met, according to some embodiments. If the trigger criteria is met for a target AP such as target AP1 (e.g., a first target AP), the associated AP 112 may, at 1306A-4, transmit a triggered notification regarding target AP1 to the STA 106. Furthermore, if additional triggering criteria is determined to be met for target AP1, target AP2 among other target AP(s) 114, the associated AP 112 may, at 1306A-5, transmit additional triggered notifications associated with the target APs (e.g., target AP1 and target AP2). According to some embodiments, the STA 106 can specify in the message of 1306A-1 particular conditions or criteria or events that, upon being satisfied or upon occurrence thereof, should result in the associated AP 112 transmitting one or more notifications to the STA 106.

According to some embodiments, the network can consider that the subscribed APs are the main candidates for roaming. For example, if the network considers that the STA performance is poor, it can recommend the STA to roam on an AP to which the STA has subscribed to receive information or notifications for. Alternatively, the network can request the STA to roam to an AP MLD for which the STA has frequently requested information for. In another embodiment, the network can request the STA to roam to an AP MLD to which the STA has setup link(s).

Some notifications can be automatically transmitted to all STAs that have subscribed to receive one or more notification(s) from the remote AP MLD or have setup one or more link(s) with the AP MLD. One such remote AP notification can be an AP MLD delete notification which is transmitted when a connection to a remote AP MLD device is lost, the remote AP MLD is powered down, and/or is suffering from software issues. Accordingly, all links to the AP MLD can need to be deleted. Another such remote AP notification can be an Affiliated AP deletion notification which is transmitted when an AP MLD reorganizes its AP(s). The available BSSs can be changed to give more resources to loaded BSSs or to enable AP power savings. Accordingly, one or more links to the AP MLD can need to be deleted. Furthermore, a Link deleted remote AP notification can be transmitted when the network considers the STA to be too far away from the remote AP MLD with the links and/or the STA has no interest to maintain the link. Accordingly, one or more links to the AP MLD can need to be deleted, according to some embodiments.

In some embodiments, some remote AP notifications can be transmitted if the STA has subscribed to receive notifications of regarding event(s). For example, STA can subscribe to a remote AP notification of a Notify AP enablement or Notify AP disablement which is transmitted if the remote AP is in power save mode and is not reachable over the air (OTA). For example, the STA can power up a disabled remote link through the associated AP. As another example, a remote AP notification can include a Notify critical parameter update notification which can be transmitted (if requested by link management mode 2) if a critical operating parameter of the remote AP has changed. In this case, the STA should update appropriate AP parameters in the link or the AP MLD. In some embodiments, this notify critical parameter update notification can include a change in the AP's operating channel (e.g., if the AP's primary channel is changed from 5GHz channel 36 to 5GHz channel 141, as one example).

Additionally or alternatively, at 1306B, the STA 106 can transmit a response message to the associated AP 112 indicating for the target AP(s) 114 to transition to a hot-standby mode, according to some embodiments. In other words, the STA 106 can provide instructions to the associated AP 112 for the target AP(s) 114 to be ready (e.g., enter a hot-standby mode) to more readily and efficiently receive and react to roaming signaling (e.g., a roaming request) since the STA 106 can roam soon. For example, the response from the AP to the STA can signal a stand-by link(s) maintenance mode. For example, the response message can signal a first mode (e.g., Mode 1) as a default mode associated with no link maintenance. Additionally or alternatively, the response can signal a second mode (e.g., Mode 2) associated with the link being maintained. For example, BSS parameter updates can be sent to the STA in the associated AP and the AP can use TID-to-link mapping or congestion control as if the STA is to be associated. A third mode (e.g., Mode 3) that can be signaled by the response can correspond to a hot stand-by condition or state in which the STA will roam very soon. Accordingly, the buffered DL frames and received UL frames that can be waiting for reordering before forwarding to the Internet can be forwarded to the queried AP, according to some embodiments.

Additionally or alternatively, the network can consider that the STA 106 is experiencing lower performance conditions on the current associated AP MLD (e.g., associated AP 112). Accordingly, the associated AP 112 may, in some instances, determine based on the setup links or queries a target AP to be a good candidate for the STA to roam to. The associated AP 112 can then take initiative to transition the candidate AP (e.g., target AP(s) 114) into hot-stand-by mode that can allow the STA 106 to roam to the candidate AP quickly. In some embodiments, the associated AP 112 can send a BTM request frame to the STA 106 to signal that the candidate AP MLD is in a hot-stand-by mode and the STA 106 can roam to the candidate AP MLD without needing to perform any other additional preparation. For example, the additional preparations can include data forwarding to the target AP 114, verification signaling indicating that SCS steams QoS are satisfied and that the target AP 114 has acceptable transmission capacity available and allocating transmission resources for UL trigger frames and DL MU PPDU transmissions for the STA 106. According to some embodiments, the BTM Request can include parameters for the data transmissions.

In some embodiments, the STA can send a roaming request to roam to the target AP 114 that is in a hot-stand-by mode. Additionally or alternatively, if the network has prepared a target AP 114 MLD to be in a hot-stand-by mode for which the STA 106 does not have a link, the STA 106 can setup one or more links to the target AP 114 MLD before roaming to it. Furthermore, the STA can expect that by roaming, the DL data flow change to the roamed hot-stand-by target AP 114 can be quick and the SCS streams should satisfy their QoS requirements during the roaming.

According to some embodiments, the network can set multiple candidate AP MLDs (e.g., multiple target APs 114) into hot-stand-by modes. Accordingly, the network can possibly not be aware which target AP 114 would be a preferred roaming target. For instance, the associated AP 112 can set all target AP(s) 114 from which the STA 106 has subscribed into hot-stand-by, according to some embodiments.

As the STA 106 can possibly not directly transmit the responses of 1306A or 1306B to the target AP(s) 114, the associated AP 112 can forward or transmit appropriate signaling to the target AP(s) 114 to provide such instructions, according to some embodiments. Additionally, while the query, request, and response messages of 1302A/1302B, 1304, and 1306A/1306B can respectively be BTM query, BTM request, and BTM response messages according to some embodiments, these messages can possibly not be limited to this format or type of message. For example, the query, request, and response messages can also be neighbor AP information frames associated with neighbor AP information frame formats. The message can be a neighbor AP information request frame associated with a neighbor AP information request frame format, according to some embodiments. Additionally, the response message can be a neighbor AP information response frame associated with a neighbor AP information response frame format, according to some embodiments.

According to some embodiments, STA capabilities and operating parameters can help APs to estimate performance and therefore the AP can check that ongoing UL trigger schedules are acceptable to serve the SCS streams or an SCS stream with strict performance requirements. For example, the AP can check or verify the throughput and delay for the STA setup links or settings, according to some embodiments.

According to further embodiments, 6 GHz links can determine when a STA roams and therefore instances in which a STA is roaming can be more frequent. Therefore, PHY performance measurements schemes can be used for target AP(s) to determine acceptable performance on numerous links when a STA roams. Furthermore, the performance estimations should be within ± 5% to ensure accurate link conditions in order to avoid roaming to a link with unknown or degraded performance, according to some embodiments.

In some embodiments, the query message from the STA 106 can include a request for a list of queried AP MI,Ds from the associated AP 112. Alternatively, the query message can include a request for STA parameters and link throughputs for each target AP MLD and common SCS traffic settings for all AP MLDs, according to some embodiments. Accordingly, the associated AP 112 may, in response to the query, transmit a message (e.g., a request message) to the STA 106 indicating which AP MLDs meet the SCS streams low latency requirements indicated in the query message.

According to some instances, there can be various link performance modes associated with how link performance is provided. For example, a conditional link performance mode can be associated with the throughput and delay results area being provided conditionally based on a link's transmission rate. Alternatively, a link performance mode which is estimated via typical roaming can be provided based on the AP estimating the throughputs based on typical roaming STA rates. As another alternative, a link performance mode in which the STA signals an estimation value can provide the link performance for performance estimations. In other words, a STA can signal a general value for all links, according to some embodiments. Additionally, a link performance mode can be estimated via a STA transmission in which the STA and AP measure the link(s) performance, according to some embodiments. However, these measurements can possibly not be private and eavesdroppers can determine STA location information.

According to some embodiments, information in the message from the associated AP 112 can include information for first (e.g., AP 1) and second (e.g., AP 2) AP(s) which operate using 5GHz and 8 GHz links respectively and are associated with a DL 95% access delay for the access category (AC), an UL EDCA 95% delay (AC), a maximum DL or UL throughput (AC), and a trigger transmission (TX) delay. In other words, the response message can indicate that the DL and UL delays are in the top 95^{th} percentile with respect to a nominal value (e.g., 100%). Accordingly, the response message can indicate that the queried UHR AP and associated SCS streams delay and throughput are acceptable, according to some embodiments.

### Additional Information

According to some embodiments and related to the AP neighbor information request frames discussed above, said neighbor AP information request frames (corresponding to an AP neighbor information request frame format) can include a frame control field which can include parameter settings such as "Type B3B2=00", "Subtype (B7-B4) = 1101", "Protected Frame (B14) = 1" and "Protected Action Frame", according to some embodiments. Additionally or alternatively, the neighbor AP information request frame can include a destination address (DA) field which can include parameter settings including the BSSID of the currently associated AP as well as a sender address which can include the MAC address of the STA. The neighbor AP information request frame can also include a category field which can include parameter settings such as newly defined categories corresponding to values between 33 and 125. Additionally or alternatively, the neighbor AP information request frame can include an action field which can include a parameter set to a value of zero to indicate a "request" from the STA 106 to the AP associated AP 112. Furthermore, the neighbor AP information request frame can include duration, sequence control, dialog token, payload, message integrity code (MIC), and frame check sequence (FCS) fields.

Furthermore, the payload of the neighbor AP information request frames can include payload fields corresponding to requested APs including a "max number of hops" field, a "SSID list present" field, and "BSSID list present" field. For example, the "max number of hops" field can specify the maximum number of hops of neighboring APs from the currently associated AP. A maximum number of hops value of zero can correspond to only co-located BSSs which corresponds to the physical AP device operates the network. Alternatively, maximum number of hops values of one, two, and three can respectively correspond to 1-hop neighborhoods, 2-hop neighborhoods, or a neighborhood that is not limited by a maximum number of hops, according to some embodiments. Furthermore, the "BSSID list present" field can indicate or include SSID values that can allow the STA 106 to request parameters of the network. Accordingly and depending on the AP's configuration, these parameters or values can be provided to the STA 106, according to some embodiments. In some embodiments, the SSID and BSSID lists can be considered to union such that all APs meeting particular criteria are reported, according to some embodiments.

In some embodiments, the payload of the neighbor AP information request frame can include payload fields corresponding to requested parameters including "all capabilities / BPCC", "request BSS load", "is SCS streams QoS OK", "throughput and delay", and "request AP Effective Isotropic Radiated Power (EIRP)". For example, the including "all capabilities / BPCC" field can include a value of one to request all capabilities and operating parameters present in beacons or probe responses transmitted by neighboring APs. Alternatively, the "all capabilities / BPCC" field can include a value of zero to request updates since the last request, according to some embodiments. Furthermore, the "is SCS streams QoS OK" field can include one or more parameters or values to specify a BSS load for each reported AP, according to some embodiments. Additionally, the "throughput and delay" field can include values of throughput and delay estimations that are requested.

According to some embodiments, the payload of the neighbor AP information request frame can include payload fields corresponding to requested APs including "STA parameters", "list of SSIDs (Optional)", "List of BSSIDs (Optional)", and "List of BPCCs (Optional)". The "STA parameters" field can specify each reported AP's EIRP in dBM, according to some embodiments. Additionally and related to the "List of BPCCs (Optional)" field, if only a partial set of updates is requested, the BPCC can include the last known parameter values, according to some embodiments. Additionally, the neighbor AP information request frame can be characterized or included as a MAC payload.

According to some embodiments and related to the AP neighbor information response frames discussed above, AP neighbor information response frames (corresponding to an AP neighbor information response frame format) can include a frame control field which can include parameter settings such as "Type B3B2=00", "Subtype (B7-B4) = 1101", "Protected Frame (B14) = 1" and "Protected Action Frame", according to some embodiments. Additionally or alternatively, the neighbor AP information response frame can include a destination address (DA) field which can include parameter settings including the BSSID of the currently associated AP as well as a sender address which can include the MAC address of the STA. The neighbor AP information response frame can also include a category field which can include parameter settings such as a newly defined category value (e.g., such as 34, as one example). Additionally or alternatively, the neighbor AP information response frame can include an action field which can include a parameter set to a value of one to indicate a "response" from the associated AP 112 to the STA 106. Furthermore, the neighbor AP information request frame can include duration, sequence control, dialog token, payload, message integrity code (MIC), and frame check sequence (FCS) fields.

Furthermore, the payload of the neighbor AP information can include information including the number of APs report as well as variable AP information elements (IEs). Furthermore, the AP IEs can include fields or parameters/values including "Element ID", "Length", "BSSID", "SSID", "Operating Class", "Channel Number", and "Hop Count". Additionally, the AP IEs can include fields, parameters, or values describing or containing information related to all elements included in the beacon and probe responses from the neighboring AP. These elements corresponding to the beacon and probe responses can be in the same order as the neighbor AP information response frame, according to some embodiments. Additionally, the AP IEs can include fields, parameters, or values describing or containing information related to throughput and delay statistics, SCS IDs for which the QoS is not met or satisfied, or proposed QoS characteristics elements for the SCS IDs for which the QoS is compromised, according to some embodiments. Additionally, the neighbor AP information response frame can be characterized or included as a MAC payload.

In some embodiments, a non-AP MLD can transmit, to an AP MLD, a query message requesting information comprising at least one of one or more sets of parameters or identities associated with one or more target AP MLDs. The non-AP MLD can receive, from the AP MLD, a message (e.g., a request message) comprising the information and select, based at least in part on the information received from the AP MLD, a target AP MLD of the one or more target AP MLDs. The non-AP MLD can transmit a roaming request to the target AP MLD and receive a roaming response from the target AP MLD.

According to some embodiments, the method can further include scanning the one or more target AP MLDs for performance information and determining, based on least on the performance information, to transmit the roaming request. Additionally or alternatively, the method can further include transmitting, to the AP MLD, a response message indicating approval to receive notifications corresponding to the one or more target AP MLDs. Furthermore, the method can include receiving, from the AP MLD, one or more notifications corresponding to the one or more target AP MLDs. According to some embodiments, the one or more notifications can be associated with triggering criteria.

In some embodiments, the query message can include queries corresponding to a received signal strength indicator (RSSI) estimation of the one or more target AP MLDs, whether one of the one or more target AP MLDs is acceptable for the non-AP MLD's traffic, which operation parameters the non-AP MLD should utilize, which of the one or more target AP MLDs is a preferred target AP MLD for roaming, delay and throughput information of the non-AP MLD's traffic, or which of the one or more target AP MLDs is preferred based on security settings of the non-AP MLD. Additionally or alternatively, the query message can indicate to the AP MLD to provide performance estimation information based on at least one of link setup parameters corresponding to a link of the non-AP MLD, explicitly provided link parameters, or parameters used by the AP MLD for one or more other links.

In some embodiments, the message can include information corresponding to the one or more target AP MLDs and indicates at least one of whether a quality of service (QoS) of stream classification service (SCS) streams for the one or more target AP MLDs is acceptable, if a throughput for the one or more target AP MLDs is higher than a first threshold, if a delay for the one or more target AP MLDs is lower than a second threshold, or if a security mode is supported by the one or more target AP MLDs. Additionally or alternatively, the one or more target AP MLDs can be one or more neighboring APs, one or more explicitly requested APs, all APs within a 1-hop or 2-hop neighborhood, or all APs in a mobility domain.

According to further embodiments, an apparatus can include at least one processor configured to cause an AP MLD to receive, from a non-AP MI,D, a query requesting information associated with one or more parameters of one or more target AP MLDs. The at least one processor can be further configured to cause the AP MLD to transmit, to the non-AP MLD, the information including additional information associated with link performance of the one or more target AP MLDs. The at least one processor can be further configured to cause the AP MLD to receive, from the non-AP MLD, an indication to instruct a target AP MLD of the one or more target APs to transition to a maintenance mode.

According to some embodiments, the information can include at least one of throughput information, delay information, or information indicating whether quality of service (QoS) stream classification service (SCS) streams are maintained. Additionally or alternatively, the query can indicate to the AP MLD to provide performance measurement information based on the one or more parameters. Accordingly, the at least one processor can be further configured to cause the AP MLD to perform, based at least in part on the one or more parameters, throughput and latency measurements.

In some embodiments, the at least one processor can be further configured to cause the AP MLD to determine, based on a basic service set parameter change count value (BPCC) value changing from a previous BPCC value, to refrain from transmitting the information to the non-AP MLD. Additionally or alternatively, the query message and message (e.g., a request message) can be respectively received and transmitted in accordance with the bandwidth (BW), number of spatial streams (NSS), and modulation and coding scheme (MCS) associated with the non-AP MLD.

According to some embodiments, the maintenance mode can be one of a default mode, a link-maintained mode in which basic service set (BSS) parameter updates of the one or more target APs are transmitted to the non-AP MLD from the AP MLD, or a hot stand-by mode in which buffered frames are forwarded to the target AP MLD by the AP MLD. Additionally or alternatively, the at least one processor can be further configured to cause the AP MLD to receive, from the non-AP MLD, a response message, wherein the response message indicates approval to transmit notifications corresponding to at least one target AP of the one or more target AP MLD. Furthermore, the at least one processor can be further configured to cause the AP MLD to determine whether one or more conditions are satisfied and transmit, based at least in part on the determination, one or more notifications associated with the at least one target AP to the non-AP MLD.

In some embodiments, a non-access point (non-AP) multi-link device (MLD) can include a radio and a processor operably coupled to the radio and configured to cause the non-AP MLD to establish one or more links with an AP MLD. Additionally, respective links of the one or more links can operate according to respective link-specific operating parameters. Furthermore, the processor can be configured to cause the non-AP MLD to transmit, to an AP MI,D, a query requesting information associated with one or more target AP MLDs. Additionally or alternatively, the processor can be configured to cause the non-AP MLD to receive the information from the AP MLD including additional information associated with link performance of the one or more target AP MLDs according to the link-specific operating parameters. Furthermore, the processor can be configured to cause the non-AP MLD to transmit, to the AP MI,D, an indication to instruct a target AP of the one or more target APs to transition to a hot stand-by mode.

In some embodiments, the processor can be configured to cause the non-AP MLD to adjust the respective link-specific operating parameters. Additionally or alternatively, the link-specific operating parameters can include at least one of power management (PM) operating parameters, target wake time (TWT) operating parameters, subchannel selective transmission (SST) operating parameters, or enhanced multi-link single radio (EMI,SR) operating parameters. In some embodiments, the query can include a common stream classification service (SCS) traffic setting and the information can include one or more identities of target AP MLDs of the one or more target AP MLDs that satisfy the common SCS traffic setting.

According to some scenarios, Wi-Fi 6 STAs roaming points can be near the loss of a 5 GHz link. As 6 GHz radio can possibly not be as common on Wi-Fi STAs / AP(s), STAs can associate to single 5 GHz AP(s) at a time.

In contrast to Wi-Fi 6, Wi-Fi 7 non-AP MLDs can have multi-link associations. For example, non-AP MLDs can have links on 6 GHz, 5 GHz and 2.4 GHz. However, the non-AP MLD roaming point depends on 6 GHz links availability and mobility for which 6 GHz radios have smaller coverage areas. Accordingly, STAs can have multiple target AP MLDs with links on 2.4 GHz and 5 GHz, but only few target AP MLDs with links also on 6 GHz. Therefore, AP(s) can estimate that at least one neighbor AP MLD will have acceptable 6 GHz and 5 GHz link performance, according to some embodiments.

As roaming is more frequent in the 6 GHz coverage areas, this increase can complicate the association procedures for STAs. Accordingly, it would be beneficial for roaming procedures to be more efficient by preparing links for roaming. However, in order to prepare said links for roaming, the target AP MLD delay and throughput performance needs to be known. Accordingly, improvements are desired.

With regard to estimating transmission resource availability, the AP can estimate whether SCS flow has transmission resources based on if the STA operates on a large BW. For example, if the STA operates on a large bandwidth, this can be associated with a high RU allocation flexibility (e.g., any RU on the large BW). Furthermore, if the STA operates on a large BW, the STA can have high power consumption and EMI,SR / dynamic SM PS can help to lower STA power consumption, according to some embodiments.

Alternatively, the AP can estimate whether SCS flow has transmission resources based on if the if STA operates on small BW. For example, if the STA operates on a small BW, RU allocation can only have a few alternatives which can complicate SCS reservation. Accordingly, this smaller BW can result in long transmission times, according to some embodiments.

Accordingly, it can be possible for the STA to improve resource allocation flexibility. For example, if the SST STA operates on a dedicated BW and on an alternative primary channel (e.g., 20MHz), the AP can transmit to the SST- STA even if the primary 20 MHz channel is busy. Alternatively, the STA can improve resource allocation flexibility via a UHR STA defining an alternative primary channel capability. For example, a UHR STA can switch to alternative primary channel (which can or can possibly not be associated with a large operating BW) if the primary 20 MHz channel is busy. Furthermore, scanning STA operation on SST mode or supporting alternative primary channels can be considered in throughput and delay estimations, according to some embodiments.

With regard to delay estimations, link delay estimation is based on access delays and scheduling delays, according to some embodiments. For example, access delay can be associated with a transmission opportunity (TXOP) obtaining time in which the AP measures access delays for Trigger frames and DL MU PPDUs. Additionally, the UL triggered access delay can signal how well the minimum and maximum triggering intervals can be achieved. Accordingly, the AP can request STAs to measure said delays or the AP can estimate UL EDCA AC specific access delays, according to some embodiments.

Additionally, scheduling delays can be associated with how well trigger transmission times meet schedule needs. For example, SCS flow is setup for low latency traffic and QoS characteristics elements can signal or indicate the UL triggering times and delay requirements. Furthermore, the scanned UHR AP can check whether ongoing UL trigger schedules have resources for the low latency SCS streams. Alternatively, the AP can transmit more UL Trigger frames, according to some embodiments.

### Example Embodiments

In some embodiments, a non-AP MLD can transmit, to an AP MI,D, a query for information comprising at least one of one or more sets of parameters or identities associated with one or more target AP MLDs. The non-AP MLD can receive, from the AP MLD, a message (e.g., a request message) comprising the information and select, based at least in part on the information, a target AP MLD of the one or more target AP MLDs. The non-AP MLD can transmit a roaming request to the target AP MLD and further receive a roaming response from the target AP MLD.

According to some embodiments, the method can further include scanning the one or more target AP MLDs for performance information and determining, based on least on the performance information, to transmit the roaming request. Additionally or alternatively, the method can further include transmitting, to the AP MLD, a response message indicating approval to receive notifications corresponding to the one or more target AP MLDs. Furthermore, the method can include receiving, from the AP MI,D, one or more notifications corresponding to the one or more target AP MLDs. According to some embodiments, the one or more notifications can be associated with triggering criteria. Additionally or alternatively, the query can comprise a basic service set (BSS) transition management (BTM) query message, according to some embodiments.

In some embodiments, the query can comprise queries associated with a received signal strength indicator (RSSI) estimation of the one or more target AP MLDs, whether one of the one or more target AP MLDs is acceptable for traffic of the non-AP MLD, which operation parameters the non-AP MLD should utilize, which of the one or more target AP MLDs is a preferred target AP MLD for roaming, delay and throughput information of traffic of the non-AP MLD, or which of the one or more target AP MLDs is preferred based on security settings of the non-AP MLD. Additionally or alternatively, the query can indicate to the AP MLD to provide performance estimation information based on at least one of link setup parameters corresponding to a link of the non-AP MLD, explicitly provided link parameters, or parameters used by the AP MLD for one or more other links.

In some embodiments, the message (e.g., a request message) can comprise information corresponding to the one or more target AP MLDs and indicates at least one of whether a quality of service (QoS) of stream classification service (SCS) streams for the one or more target AP MLDs is acceptable, when a throughput for the one or more target AP MLDs is higher than a first threshold, when a delay for the one or more target AP MLDs is lower than a second threshold, or when a security mode is supported by the one or more target AP MLDs. Additionally or alternatively, the one or more target AP MLDs can be one or more neighboring APs MLDs, one or more explicitly requested AP MLDs, all AP MLDs within a 1-hop or 2-hop neighborhood, or all AP MLDs in a mobility domain.

According to further embodiments, a processor can be configured to cause an AP MLD to receive, from a non-AP MI,D, a query for information associated with one or more parameters of one or more target AP MLDs. The processor can be further configured to cause the AP MLD to transmit, to the non-AP MLD, the information comprising additional information associated with link performance of the one or more target AP MLDs. The processor can be further configured to cause the AP MLD to receive, from the non-AP MLD, an indication to instruct a target AP MLD of the one or more target APs to transition to a maintenance mode.

According to some embodiments, the information can include at least one of throughput information, delay information, or information indicating whether QoS SCS streams are maintained. Additionally or alternatively, the query can indicate to the AP MLD to provide the non-AP MLD with performance measurement information based on the one or more parameters. Accordingly, the processor can be further configured to cause the AP MLD to perform, based at least in part on the one or more parameters, throughput and latency measurements associated with the one or more target AP MLDs.

In some embodiments, the processor can be further configured to cause the AP MLD to determine, based on a BSS parameter change count value (BPCC) value changing from a previous BPCC value, to refrain from transmitting the information to the non-AP MLD. According to some embodiments, the maintenance mode can be one of a default mode, a link-maintained mode in which BSS parameter updates of the one or more target APs are transmitted to the non-AP MLD from the AP MLD, or a hot stand-by mode in which buffered frames are forwarded to the target AP MLD by the AP MLD. Additionally or alternatively, the processor can be further configured to cause the AP MLD to receive, from the non-AP MLD, a response message, wherein the response message indicates approval to transmit notifications corresponding to at least one target AP of the one or more target AP MLD. Furthermore, the processor can be further configured to cause the AP MLD to determine whether one or more conditions are satisfied and transmit, based at least in part on the determination, one or more notifications associated with the at least one target AP to the non-AP MLD.

In some embodiments, a non-access point (non-AP) multi-link device (MLD) can include a radio and a processor operably coupled to the radio and configured to cause the non-AP MLD to establish one or more links with an AP MLD. Additionally, respective links of the one or more links can operate according to respective link-specific operating parameters. Furthermore, the processor can be configured to cause the non-AP MLD to transmit, to an AP MI,D, a query requesting information associated with one or more target AP MLDs. Additionally or alternatively, the processor can be configured to cause the non-AP MLD to receive, from the AP MLD, the information comprising additional information associated with link performance of the one or more target AP MLDs according to the link-specific operating parameters. Furthermore, the processor can be configured to cause the non-AP MLD to transmit, to the AP MI,D, an indication to instruct a target AP of the one or more target APs to transition to a hot stand-by mode.

In some embodiments, the processor can be configured to cause the non-AP MLD to adjust the respective link-specific operating parameters. Additionally or alternatively, the link-specific operating parameters can include at least one of power management (PM) operating parameters, target wake time (TWT) operating parameters, transaction identifier (TID)-to-link mapping parameters, subchannel selective transmission (SST) operating parameters, or enhanced multi-link single radio (EMI,SR) operating parameters. In some embodiments, the query can include a common stream classification service (SCS) traffic setting and the information can include one or more identities of target AP MLDs of the one or more target AP MLDs that satisfy the common SCS traffic setting.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device can be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device can be realized in any of various forms.

Exemplary computer programs, memory media, apparatuses, integrated circuits, mobile stations, non-volatile computer-readable media, wireless devices, mobile devices, devices, methods, processors, and non-access point multi-link devices are set out in the following items.
1. A method, comprising:
   at a non-access point (non-AP) multi-link device (MLD):
      transmitting, to an access point (AP) MLD, a query message requesting information comprising at least one of one or more parameters or identities associated with one or more target AP MLDs;
      receiving, from the AP MLD, a request message comprising the information;
      selecting, based at least in part on the information received from the AP MLD, a target AP MLD of the one or more target AP MLDs;
      transmitting, to the target AP MI,D, a roaming request; and
      receiving, from the target AP MI,D, a roaming response.
2. The method of item 1, further comprising:
   scanning the one or more target AP MLDs for performance information; and
   determining, based on least on the performance information, to transmit the roaming request.
3. The method of item 1, further comprising:
   transmitting, to the AP MLD, a response message, wherein the response message indicates approval to receive notifications corresponding to the one or more target AP MLDs; and
   receiving, from the AP MI,D, one or more notifications corresponding to the one or more target AP MLDs.
4. The method of item 3, wherein the one or more notifications are associated with triggering criteria.
5. The method of item 1, wherein the query message comprises queries including at least one of:
   a received signal strength indicator (RSSI) estimation of the one or more target AP MLDs,
   whether one of the one or more target AP MLDs is acceptable for the non-AP MLD's traffic,
   which operation parameters the non-AP MLD should utilize,
   which of the one or more target AP MLDs is a preferred target AP MLD for roaming,
   delay and throughput information of the non-AP MLD's traffic, or
   which of the one or more target AP MLDs is preferred based on security settings of the non-AP MLD.
6. The method of item 1, wherein the query message indicates to the AP MLD to provide performance estimation information based on at least one of:
   link setup parameters corresponding to a link of the non-AP MI,D,
   explicitly provided link parameters, or
   parameters used by the AP MLD for one or more other links.
7. The method of item 1, wherein the request message includes information corresponding to the one or more target AP MLDs and indicates at least one of:
   whether a quality of service (QoS) of stream classification service (SCS) streams for the one or more target AP MLDs is acceptable,
   if a throughput for the one or more target AP MLDs is higher than a first threshold,
   if a delay for the one or more target AP MLDs is lower than a second threshold, or
   if a security mode is supported by the one or more target AP MLDs.
8. The method of item 1, wherein the one or more target AP MLDs comprise at least one of:
   one or more neighboring APs,
   one or more explicitly requested APs,
   all APs within a 1-hop or 2-hop neighborhood, or
   all APs in a mobility domain.
9. An apparatus, comprising:
   at least one processor configured to cause an access point (AP) multi-link device (MLD) to:
   receive, from a non-access point (non-AP) MI,D, a query requesting information associated with one or more parameters of one or more target AP MLDs;
   transmit, to the non-AP MI,D, the information, wherein the information includes additional information associated with link performance of the one or more target AP MLDs;
   receive, from the non-AP MLD, an indication to instruct a target AP MLD of the one or more target APs to transition to a maintenance mode.
10. The apparatus of item 9, wherein the information comprises at least one of throughput information, delay information, or information indicating whether quality of service (QoS) stream classification service (SCS) streams are maintained.
11. The apparatus of item 9, wherein the query indicates to the AP MLD to provide performance measurement information based on the one or more parameters, and wherein the at least one processor is further configured to cause the AP MLD to:
   perform, based at least in part on the one or more parameters, throughput and latency measurements.
12. The apparatus of item 9, wherein the at least one processor is further configured to cause the AP MLD to:
   determine, based on a basic service set parameter change count value (BPCC) value changing from a previous BPCC value, to refrain from transmitting the information to the non-AP MLD.
13. The apparatus of item 9, wherein the query message and request message are respectively received and transmitted in accordance with a bandwidth (BW), a number of spatial streams (NSS), and a modulation and coding scheme (MCS) associated with the non-AP MLD.
14. The apparatus of item 9, wherein the maintenance mode is one of:
   a default mode,
   a link-maintained mode in which basic service set (BSS) parameter updates of the one or more target APs are transmitted to the non-AP MLD from the AP MLD, or
   a hot stand-by mode in which buffered frames are forwarded to the target AP MLD by the AP MLD.
15. The apparatus of item 9, wherein the at least one processor is further configured to cause the AP MLD to:
   receive, from the non-AP MLD, a response message, wherein the response message indicates approval to transmit notifications corresponding to at least one target AP of the one or more target AP MLDs;
   determine whether one or more conditions are satisfied; and
   transmit, based at least in part on the determination, one or more notifications to the non-AP MLD, wherein the one or more notifications are associated the at least one target AP.
16. A non-access point (non-AP) multi-link device (MLD), comprising:
   a radio; and
   a processor operably coupled to the radio and configured to cause the non-AP MLD to:
      establish one or more links with an AP MLD, wherein respective links of the one or more links operate according to respective link-specific operating parameters;
      transmit, to an access point (AP) MLD, a query requesting information associated with one or more target AP MLDs;
      receive, from the AP MLD, the information, wherein the information includes additional information associated with link performance of the one or more target AP MLDs according to the link-specific operating parameters;
      transmit, to the AP MI,D, an indication to instruct a target AP of the one or more target APs to transition to a hot stand-by mode.
17. The non-AP MLD of item 16, wherein the processor is further configured to cause the non-AP MLD to:
   adjust the respective link-specific operating parameters.
18. The non-AP MLD of item 16, wherein the link-specific operating parameters include at least one of:
   power management (PM) operating parameters;
   target wake time (TWT) operating parameters;
   TID-to-link mapping parameters;
   subchannel selective transmission (SST) operating parameters; or
   enhanced multi-link single radio (EMI,SR) operating parameters.
19. The non-AP MLD of item 18, wherein the query comprises a common stream classification service (SCS) traffic setting.
20. The non-AP MLD of item 19, wherein the information includes one or more identities of target AP MLDs of the one or more target AP MLDs that satisfy the common SCS traffic setting.
21. A device, comprising:
   an antenna;
   a radio coupled to the antenna; and
   a processing element coupled to the radio;
   wherein the device is configured to implement a method according to any of the preceding items.
22. A memory medium comprising program instructions that, when executed, cause a device to implement a method according to any of the preceding items.
23. A computer program comprising instructions for performing any of the methods of the preceding items.
24. An apparatus comprising means for performing any of the method elements of any of the preceding items.
25. A method that includes any action or combination of actions as substantially described herein in the Detailed Description and items.
26. A method as substantially described herein with reference to each or any combination of the Figures contained herein, with reference to each or any combination of paragraphs in the Detailed Description, with reference to each or any combination of Figures and/or Detailed Description, or with reference to each or any combination of the items.
27. A wireless device configured to perform any action or combination of actions as substantially described herein in the Detailed Description, Figures, and/or items.
28. A wireless device that includes any component or combination of components as described herein in the Detailed Description and/or Figures as included in a wireless device.
29. A non-volatile computer-readable medium that stores instructions that, when executed, cause the performance of any action or combination of actions as substantially described herein in the Detailed Description and/or Figures.
30. An integrated circuit configured to perform any action or combination of actions as substantially described herein in the Detailed Description and/or Figures.
31. A mobile station configured to perform any action or combination of actions as substantially described herein in the Detailed Description and/or Figures.
32. A mobile station that includes any component or combination of components as described herein in the Detailed Description and/or Figures as included in a mobile station.
33. A mobile device configured to perform any action or combination of actions as substantially described herein in the Detailed Description and/or Figures.
34. A mobile device that includes any component or combination of components as described herein in the Detailed Description and/or Figures as included in a mobile device.
35. A device configured to perform any action or combination of actions as substantially described herein in the Detailed Description and/or Figures.
36. A device that includes any component or combination of components as described herein in the Detailed Description and/or Figures as included in a mobile device.
37. A method, comprising:
   at a non-access point (non-AP) multi-link device (MLD):
   transmitting, to an access point (AP) MLD, a query for information comprising at least one of one or more parameters or identities associated with one or more target AP MLDs;
   receiving, from the AP MLD, a message comprising the information;
   selecting, based at least in part on the information, a target AP MLD of the one or more target AP MLDs;
   transmitting, to the target AP MI,D, a roaming request; and
   receiving, from the target AP MI,D, a roaming response.
38. The method of item 37, further comprising:
   scanning the one or more target AP MLDs for performance information; and
   determining, based on least on the performance information, to transmit the roaming request.
39. The method of item 37, further comprising:
   transmitting, to the AP MLD, a response message, wherein the response message indicates approval to receive a notification corresponding to the one or more target AP MLDs; and
   receiving, from the AP MI,D, a notification corresponding to the one or more target AP MLDs, wherein the notification is associated with a triggering criterion.
40. The method of item 37, wherein the query comprises a basic service set (BSS) transition management (BTM) query message.
41. The method of item 37, wherein the query comprises at least one of:
   a query associated with a received signal strength indicator (RSSI) estimation of the one or more target AP MLDs,
   a query associated with whether one of the one or more target AP MLDs is acceptable for traffic of the non-AP MLD,
   a query associated with which operation parameters the non-AP MLD should utilize,
   a query associated with which of the one or more target AP MLDs is a preferred target AP MLD for roaming,
   a query associated with delay and throughput information of traffic of the non-AP MLD, or
   a query associated with which of the one or more target AP MLDs is preferred based on security settings of the non-AP MLD.
42. The method of item 37, wherein the query indicates to the AP MLD to provide performance estimation information based on at least one of:
   one or more link setup parameters corresponding to a link of the non-AP MI,D,
   one or more explicitly provided link parameters, or
   one or more parameters used by the AP MLD for one or more other links.
43. The method of item 37, wherein the message comprises information corresponding to the one or more target AP MLDs and indicates at least one of:
   whether a quality of service (QoS) of stream classification service (SCS) streams for the one or more target AP MLDs is acceptable,
   when a throughput for the one or more target AP MLDs is higher than a first threshold,
   when a delay for the one or more target AP MLDs is lower than a second threshold, or
   when a security mode is supported by the one or more target AP MLDs.
44. The method of item 37, wherein the one or more target AP MLDs comprise at least one of:
   one or more neighboring AP MLDs,
   one or more explicitly requested AP MLDs,
   all AP MLDs within a 1-hop or 2-hop neighborhood, or
   all AP MLDs in a mobility domain.
45. A processor configured to cause an access point (AP) multi-link device (MLD) to:
   receive, from a non-access point (non-AP) MI,D, a query for information associated with one or more parameters of one or more target AP MLDs;
   transmit, to the non-AP MLD, the information comprising additional information associated with link performance of the one or more target AP MLDs; and
   receive, from the non-AP MLD, an indication to instruct a target AP MLD of the one or more target APs to transition to a maintenance mode.
46. The processor of item 45, wherein the information comprises at least one of throughput information, delay information, or information indicating whether quality of service (QoS) stream classification service (SCS) streams are maintained.
47. The processor of item 45, wherein the query indicates to the AP MLD to provide the non-AP MLD with performance measurement information based on the one or more parameters, and wherein the processor is further configured to cause the AP MLD to:
   perform, based at least in part on the one or more parameters, a throughput or a latency measurement associated with the one or more target AP MLDs.
48. The processor of item 45, wherein the processor is further configured to cause the AP MLD to:
   determine that a basic service set (BSS) parameter change count (BPCC) value has changed from a previous BPCC value.
49. The processor of item 45, wherein the query comprises a basic service set (BSS) transition management (BTM) query message.
50. The processor of item 45, wherein the maintenance mode is one of:
   a default mode,
   a link-maintained mode in which basic service set (BSS) parameter updates of the one or more target APs are transmitted to the non-AP MLD from the AP MLD, or
   a hot stand-by mode in which buffered frames are forwarded to the target AP MLD by the AP MLD.
51. The processor of item 45, wherein the processor is further configured to cause the AP MLD to:
   receive, from the non-AP MLD, a response message, wherein the response message indicates approval to transmit notifications corresponding to at least one target AP of the one or more target AP MLDs;
   determine whether one or more conditions are satisfied; and
   transmit, based at least in part on the determination, a notification to the non-AP MLD, wherein the notification is associated with the at least one target AP.
52. A non-access point (non-AP) multi-link device (MLD), comprising:
   a radio; and
   a processor operably coupled to the radio and configured to cause the non-AP MLD to:
      establish one or more links with an AP MLD, wherein respective links of the one or more links operate according to respective link-specific operating parameters;
      transmit, to an access point (AP) MLD, a query requesting information associated with one or more target AP MLDs;
      receive, from the AP MLD, the information comprising additional information associated with link performance of the one or more target AP MLDs according to the link-specific operating parameters; and
      transmit, to the AP MI,D, an indication to instruct a target AP of the one or more target APs to transition to a hot stand-by mode.
53. The non-AP MLD of item 52, wherein the processor is further configured to cause the non-AP MLD to:
   adjust at least one link-specific operating parameter of the respective link-specific operating parameters.
54. The non-AP MLD of item 52, wherein the link-specific operating parameters include at least one of:
   power management (PM) operating parameters;
   target wake time (TWT) operating parameters;
   transaction identifier (TID)-to-link mapping parameters;
   subchannel selective transmission (SST) operating parameters; or
   enhanced multi-link single radio (EMI,SR) operating parameters.
55. The non-AP MLD of item 52, wherein the query comprises a common stream classification service (SCS) traffic setting.
56. The non-AP MLD of item 55, wherein the information includes one or more identities of target AP MLDs of the one or more target AP MLDs that satisfy the common SCS traffic setting.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
at a non-access point (non-AP) multi-link device (MLD):
transmitting, to an access point (AP) MLD, a query for information comprising at least one of one or more parameters or identities associated with one or more target AP MLDs;
receiving, from the AP MLD, a message comprising the information;
selecting, based at least in part on the information, a target AP MLD of the one or more target AP MLDs;
transmitting, to the target AP MI,D, a roaming request; and
receiving, from the target AP MI,D, a roaming response.

2. The method of claim 1, further comprising:
scanning the one or more target AP MLDs for performance information; and
determining, based on least on the performance information, to transmit the roaming request.

3. The method of claim 1, further comprising:
transmitting, to the AP MLD, a response message, wherein the response message indicates approval to receive notifications corresponding to the one or more target AP MLDs; and
receiving, from the AP MI,D, a notification corresponding to the one or more target AP MLDs, wherein the notification is associated with a triggering criterion.

4. The method of claim 1, wherein the query comprises a basic service set (BSS) transition management (BTM) query message.

5. The method of claim 1, wherein the query comprises at least one of:
a query associated with a received signal strength indicator (RSSI) estimation of the one or more target AP MLDs,
a query associated with whether one of the one or more target AP MLDs is acceptable for traffic of the non-AP MLD,
a query associated with which operation parameters the non-AP MLD should utilize,
a query associated with which of the one or more target AP MLDs is a preferred target AP MLD for roaming,
a query associated with delay and throughput information of traffic of the non-AP MLD, or
a query associated with which of the one or more target AP MLDs is preferred based on security settings of the non-AP MLD.

6. The method of claim 1, wherein the query indicates to the AP MLD to provide performance estimation information based on at least one of:
one or more link setup parameters corresponding to a link of the non-AP MI,D,
one or more explicitly provided link parameters, or
one or more parameters used by the AP MLD for one or more other links.

7. The method of claim 1, wherein the message comprises information corresponding to the one or more target AP MLDs and indicates at least one of:
whether a quality of service (QoS) of stream classification service (SCS) streams for the one or more target AP MLDs is acceptable,
when a throughput for the one or more target AP MLDs is higher than a first threshold,
when a delay for the one or more target AP MLDs is lower than a second threshold, or
when a security mode is supported by the one or more target AP MLDs.

8. The method of claim 1, wherein the one or more target AP MLDs comprise at least one of:
one or more neighboring AP MLDs,
one or more explicitly requested AP MLDs,
all AP MLDs within a 1-hop or 2-hop neighborhood, or
all AP MLDs in a mobility domain.

9. A processor configured to cause an access point (AP) multi-link device (MLD) to:
receive, from a non-access point (non-AP) MI,D, a query for information associated with one or more parameters of one or more target AP MLDs;
transmit, to the non-AP MLD, the information comprising additional information associated with link performance of the one or more target AP MLDs; and
receive, from the non-AP MLD, an indication to instruct a target AP MLD of the one or more target APs to transition to a maintenance mode.

10. The processor of claim 9, wherein the information comprises at least one of throughput information, delay information, or information indicating whether quality of service (QoS) stream classification service (SCS) streams are maintained.

11. The processor of claim 9, wherein the query indicates to the AP MLD to provide the non-AP MLD with performance measurement information based on the one or more parameters, and wherein the processor is further configured to cause the AP MLD to:
perform, based at least in part on the one or more parameters, a throughput or a latency measurement associated with the one or more target AP MLDs.

12. The processor of claim 9, wherein the processor is further configured to cause the AP MLD to:
determine that a basic service set (BSS) parameter change count (BPCC) value has changed from a previous BPCC value.

13. The processor of claim 9, wherein the query comprises a basic service set (BSS) transition management (BTM) query message.

14. The processor of claim 9, wherein the maintenance mode is one of:
a default mode,
a link-maintained mode in which basic service set (BSS) parameter updates of the one or more target APs are transmitted to the non-AP MLD from the AP MLD, or
a hot stand-by mode in which buffered frames are forwarded to the target AP MLD by the AP MLD.

15. An apparatus, comprising:
a processor configured to, when executing instructions stored on a memory, cause a non-access point (non-AP) multi-link device (MLD) to:
establish one or more links with an AP MLD, wherein respective links of the one or more links operate according to respective link-specific operating parameters;
transmit, to an access point (AP) MLD, a query requesting information associated with one or more target AP MLDs;
receive, from the AP MLD, the information comprising additional information associated with link performance of the one or more target AP MLDs according to the link-specific operating parameters; and
transmit, to the AP MI,D, an indication to instruct a target AP of the one or more target APs to transition to a hot stand-by mode.
